# EUROPEAN PATENT SPECIFICATION

(11) **EP 4 346 304 B1**
(45) Date of publication and mention of the grant of the patent: **09.09.2026**
(21) Application number: 22851834.6
(22) Date of filing: 12.07.2022
(51) Int. Cl.: H04W 72/04, H04L 5/00, H04W 72/541, H04W 24/02

(54) **COMMUNICATION METHOD, APPARATUS, AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 31.07.2021 CN 202110877455
(43) Date of publication of application: 03.04.2024
(73) Proprietor: Huawei Technologies Co., Ltd., Shenzhen, Guangdong 518129 (CN)
(72) Inventor: LI, Ruijie, Shenzhen, Guangdong 518129 (CN); GUAN, Lei, Shenzhen, Guangdong 518129 (CN)
(74) Representative: Goddar, Heinz J.
(86) International application number: PCT/CN2022/105033
(87) International publication number: WO 2023/011120

(56) References cited:
- WO-A1-2020/146891
- WO-A1-2021/114206
- WO-A1-2021/138918
- CN-A- 105 009 640
- CN-A- 108 574 986
- CN-A- 108 574 986
- CN-A- 109 391 994
- CN-A- 112 655 273

## Description

### TECHNICAL FIELD

This application relates to the communication field, and more specifically, to a communication method, apparatus, and system.

### BACKGROUND

Compared with previous generations of mobile communication systems, a 5th generation (5th generation, 5G) communication system has higher requirements on a transmission rate, a latency, and power consumption, and is dedicated to supporting higher system performance, and supporting a plurality of service types, different deployment scenarios, and a wider spectrum range. Enhanced mobile broadband (enhanced mobile broadband, eMBB), massive machine type communication (massive machine type communication, mMTC), and ultra-reliable low-latency communication (ultra-reliable low-latency communication, URLLC) are three typical application scenarios of the 5G communication system.

Currently, when inter-cell interference measurement is performed, there is a specific time interval between a moment at which channel measurement or interference measurement is performed and a moment at which inter-cell interference changes. Consequently, interference obtained at the moment of the interference measurement may be inconsistent with actual interference, a result of the interference measurement is inaccurate, and the interference change cannot be accurately tracked. Therefore, how to reduce interference and improve performance of a communication system is an urgent problem to be resolved.

CN 108574986 A describes that a terminal equipment receives first indication information from a first network device. The terminal equipment determines the communication type of the first network device in a first period of time according to the first indication information, wherein the communication type includes uplink communication or downlink communication, and the terminal equipment sends second indication information to a second network equipment, wherein the second indication information is used for indicating the communication type of the first network equipment in the first period of time.

### SUMMARY

This application provides a communication method and apparatus, to reduce interference and improve reliability of information transmission when resource utilization is ensured. The invention is set out in the appended claims.

According to a first aspect, a communication method is provided. The method includes: A terminal device receives first information sent by a first network device, and the terminal device sends second information to a second network device, where the second information is determined based on the first information. In a first alternative, the first network device is a service device of the terminal device, the second network device is an interference device of the terminal device, and the method further comprises: receiving, by the terminal device, a first acknowledgement message from the first network device, wherein the first acknowledgement message indicates that the terminal device is allowed to access the second network device. In a second alternative, the first network device is an interference device of the terminal device, the second network device is a service device of the terminal device, and the method further comprises: receiving, by the terminal device, a second acknowledgement message from the second network device, wherein the second acknowledgement message indicates that the terminal device is allowed to access the first network device.

In the foregoing technical solution, the terminal device receives the first information sent by the service device, determines the second information based on the first information, and the terminal device sends the second information to the interference device, so that the interference device can obtain information transmission between the terminal device and the service device. In this way, the interference device reduces interference in the terminal device during information transmission. Alternatively, the terminal device receives the first information sent by the interference device, determines the second information based on the first information, and the terminal device sends the second information to the service device, so that the service device can obtain information transmission of the interference device. In this way, interference from the interference device is avoided when the service device transmits data. Therefore, according to the technical solution provided in this application, reliability of information transmission can be improved when resource utilization is ensured.

With reference to the first aspect, in some implementations of the first aspect, the second information is associated with a first reference signal, and the first reference signal is used by the second network device to determine the second information.

With reference to the first aspect, in some implementations of the first aspect, the terminal device receives a second reference signal sent by the second network device, where there is a first spatial relationship between the second reference signal and the first reference signal, and the first spatial relationship indicates a sending manner of the first reference signal.

With reference to the first aspect, in some implementations of the first aspect, the second information includes at least one of the following: a time-frequency resource, a modulation and coding scheme MCS, a precoding matrix indicator PMI, power, a quantity of flows, a beam direction, and an identifier of a serving terminal device of the first network device.

In the foregoing technical solution, the terminal device accesses the second network device to implement information exchange. In this way, even if the first network device and the second network device cannot directly communicate with each other, indirect communication may be implemented via the terminal device.

With reference to the first aspect, in some implementations of the first aspect, the terminal device sends a first request message to the first network device, where the first request message is for requesting the first network device to allow the terminal device to access the second network device.

In the foregoing technical solution, the terminal device requests the first network device to allow the terminal device to access the second network device, to implement information transmission between the terminal device and the second network device. In this way, even if the first network device and the second network device cannot directly communicate with each other, indirect communication may be implemented via the terminal device.

In the foregoing technical solution, the terminal device accesses the first network device to implement information exchange. In this way, even if the first network device and the second network device cannot directly communicate with each other, indirect communication may be implemented via the terminal device.

With reference to the first aspect, in some implementations of the first aspect, the terminal device sends a second request message to the second network device, where the second request message is for requesting the second network device to allow the terminal device to access the first network device.

In the foregoing technical solution, the terminal device requests the second network device to allow the terminal device to access the first network device, to implement information transmission between the terminal device and the first network device. In this way, even if the first network device and the second network device cannot directly communicate with each other, indirect communication may be implemented via the terminal device.

With reference to the first aspect, in some implementations of the first aspect, the terminal device receives a first synchronization signal sent by the first network device, where the first synchronization signal is for determining first time-frequency resource information; and the terminal device receives the first information on the first time-frequency resource information.

With reference to the first aspect, in some implementations of the first aspect, the first time-frequency resource information is associated with second time-frequency resource information, and the method includes: The terminal device sends the second information on the second time-frequency resource information.

In the foregoing technical solution, the terminal device determines the second time-frequency resource based on an association relationship between the first time-frequency resource and the second time-frequency resource, so that signaling overheads can be reduced.

With reference to the first aspect, in some implementations of the first aspect, the terminal device receives first indication information sent by the first network device, and the terminal device sends third information to the first network device based on the first indication information, where the third information is for determining whether the terminal device accesses the second network device.

With reference to the first aspect, in some implementations of the first aspect, the first indication information indicates a third time-frequency resource, and that the terminal device sends third information to the first network device based on the first indication information includes: The terminal device sends the third information to the first network device on the third time-frequency resource.

With reference to the first aspect, in some implementations of the first aspect, the first indication information indicates a time window, and
that the terminal device sends third information to the first network device based on the first indication information includes: The terminal device sends the third information to the first network device in the time window.

With reference to the first aspect, in some implementations of the first aspect, the terminal device receives a third acknowledgement message sent by the first network device, where the third acknowledgement message indicates the terminal device to send a random access channel RACH.

With reference to the first aspect, in some implementations of the first aspect, the terminal device sends fourth information to the first network device, where the fourth information is associated with the RACH. The fourth information includes at least one of the following: power, a space domain filter, a time-frequency resource, and a sequence that is of the RACH.

With reference to the first aspect, in some implementations of the first aspect, the terminal device sends a third request message to the first network device, where the third request message is for requesting the first network device to allow the terminal device to send the RACH.

With reference to the first aspect, in some implementations of the first aspect, the terminal device sends the RACH to the second network device.

With reference to the first aspect, in some implementations of the first aspect, the terminal device receives a fourth acknowledgement message sent by the first network device, where the fourth acknowledgement message is for determining to send identification information of the terminal device to the second network device.

With reference to the first aspect, in some implementations of the first aspect, the terminal device determines fifth information based on a random access response RAR, and the terminal device sends the fifth information to the first network device, where the fifth information includes a time-frequency resource and/or the MCS for sending the identification information of the terminal device.

With reference to the first aspect, in some implementations of the first aspect, the terminal device sends a fourth request message to the first network device based on the random access response RAR, where the fourth request message is used by the terminal device to request to send the identification information of the terminal device to the second network device.

With reference to the first aspect, in some implementations of the first aspect, the terminal device receives second indication information sent by the second network device, and the terminal device sends sixth information to the second network device based on the second indication information, where the sixth information is for determining whether the terminal device accesses the first network device.

With reference to the first aspect, in some implementations of the first aspect, the second indication information indicates the third time-frequency resource, and that the terminal device sends sixth information to the second network device based on the second indication information includes: The terminal device sends the sixth information to the second network device on the third time-frequency resource.

With reference to the first aspect, in some implementations of the first aspect, the second indication information indicates a time window, and that the terminal device sends sixth information to the second network device based on the second indication information includes: The terminal device sends the sixth information to the second network device in the time window.

With reference to the first aspect, in some implementations of the first aspect, the terminal device receives a fifth acknowledgement message sent by the second network device, where the fifth acknowledgement message indicates the terminal device to send a random access channel RACH.

With reference to the first aspect, in some implementations of the first aspect, the terminal device sends seventh information to the first network device, where the seventh information is associated with the RACH. The seventh information includes at least one of the following: power, a space domain filter, a time-frequency resource, and a sequence that is of the RACH.

With reference to the first aspect, in some implementations of the first aspect, the terminal device sends a fifth request message to the second network device, where the fifth request message is for requesting the second network device to allow the terminal device to send the RACH.

With reference to the first aspect, in some implementations of the first aspect, the terminal device sends the RACH to the first network device.

With reference to the first aspect, in some implementations of the first aspect, the terminal device receives a random access response RAR sent by the first network device.

With reference to the first aspect, in some implementations of the first aspect, the terminal device receives a sixth acknowledgement message sent by the second network device, where the sixth acknowledgement message is for determining to send the identification information of the terminal device to the first network device.

With reference to the first aspect, in some implementations of the first aspect, the terminal device determines eighth information based on the RAR, and the terminal device sends the eighth information to the first network device, where the eighth information includes the time-frequency resource and/or the MCS for sending the identification information of the terminal device.

With reference to the first aspect, in some implementations of the first aspect, the terminal device sends a sixth request message to the second network device based on the RAR, where the sixth request message is used by the terminal device to request to send the identification information of the terminal device to the first network device.

According to a second aspect, a communication method is provided. The method includes: A second network device receives second information sent by a terminal device, where the second information is determined based on first information, and the first information is sent by a first network device to the terminal device, where the first network device is an interference device of the terminal device, and the second network device is a service device of the terminal device.

With reference to the second aspect, in some implementations of the second aspect, the second information is associated with a first reference signal, and the method includes: The second network device determines the second information based on the first reference signal.

With reference to the second aspect, in some implementations of the second aspect, the second network device sends a second reference signal to the terminal device, where there is a first spatial relationship between the second reference signal and the first reference signal, and the first spatial relationship indicates a sending manner of the first reference signal.

With reference to the second aspect, in some implementations of the second aspect, the second information includes at least one of the following: a time-frequency resource, a modulation and coding scheme MCS, a precoding matrix indicator PMI, power, a quantity of flows, a beam direction, and an identifier of a serving terminal device of the first network device.

According to the second aspect, the first network device is the interference device of the terminal device, and the second network device is the service device of the terminal device; and the method includes: The second network device sends a second acknowledgement message to the terminal device, where the second acknowledgement message indicates that the terminal device is allowed to access the first network device.

In the foregoing technical solution, the terminal device accesses the first network device to implement information exchange. In this way, even if the first network device and the second network device cannot directly communicate with each other, indirect communication may be implemented via the terminal device.

With reference to the second aspect, in some implementations of the second aspect, the second network device receives a second request message sent by the terminal device, where the second request message is for requesting the second network device to allow the terminal device to access the first network device.

In the foregoing technical solution, the terminal device requests the second network device to allow the terminal device to access the first network device, to implement information transmission between the terminal device and the first network device. In this way, even if the first network device and the second network device cannot directly communicate with each other, indirect communication may be implemented via the terminal device.

With reference to the second aspect, in some implementations of the second aspect, the second network device receives the RACH from the terminal device.

With reference to the second aspect, in some implementations of the second aspect, the second network device sends a random access response RAR to the terminal device. With reference to the second aspect, in some implementations of the second aspect, the second network device sends second indication information to the terminal device, and the second network device receives sixth information sent by the terminal device based on the second indication information, where the sixth information is for determining whether the terminal device accesses the first network device.

With reference to the second aspect, in some implementations of the second aspect, the second indication information indicates a third time-frequency resource, and the method includes: The second network device receives the sixth information sent by the terminal device on the third time-frequency resource.

With reference to the second aspect, in some implementations of the second aspect, the second indication information indicates a time window, and the method includes: The second network device receives the sixth information sent by the terminal device in the time window.

With reference to the second aspect, in some implementations of the second aspect, the second network device sends a fifth acknowledgement message to the terminal device, where the fifth acknowledgement message indicates the terminal device to send a random access channel RACH.

With reference to the second aspect, in some implementations of the second aspect, the second network device receives a fifth request message sent by the terminal device, where the fifth request message is for requesting the second network device to allow the terminal device to send the RACH.

With reference to the second aspect, in some implementations of the second aspect, the second network device sends a sixth acknowledgement message to the terminal device, where the sixth acknowledgement message is for determining to send identification information of the terminal device to the first network device.

With reference to the second aspect, in some implementations of the second aspect, the first network device receives eighth information sent by the terminal device, where the eighth information is determined by the terminal device based on the RAR, and the eighth information includes a time-frequency resource and/or the MCS for sending the identification information of the terminal device.

With reference to the second aspect, in some implementations of the second aspect, the second network device receives a sixth request message sent by the terminal device based on the RAR, where the sixth request message is used by the terminal device to request to send the identification information of the terminal device to the first network device.

According to a third aspect, a communication apparatus is provided. The apparatus includes: a receiving unit, configured to receive first information sent by a first network device; and a sending unit, configured to send second information to a second network device, where the second information is determined based on the first information. The first network device is a service device of a terminal device, the second network device is an interference device of the terminal device, and the receiving unit is configured to receive a first acknowledgement message from the first network device, where the first acknowledgement message indicates that the terminal device is allowed to access the second network device. Alternatively, the first network device is an interference device of the terminal device, and the second network device is a service device of the terminal device, and the receiving unit is configured to receive a second acknowledgement message from the second network device, where the second acknowledgement message indicates that the terminal device is allowed to access the first network device.

With reference to the third aspect, in some implementations of the third aspect, the second information is associated with a first reference signal, and the first reference signal is used by the second network device to determine the second information.

With reference to the third aspect, in some implementations of the third aspect, the receiving unit is further configured to receive a second reference signal sent by the second network device, where there is a first spatial relationship between the second reference signal and the first reference signal, and the first spatial relationship indicates a sending manner of the first reference signal.

With reference to the third aspect, in some implementations of the third aspect, the second information includes at least one of the following: a time-frequency resource, a modulation and coding scheme MCS, a precoding matrix indicator PMI, power, a quantity of flows, a beam direction, and an identifier of a serving terminal device of the first network device.

With reference to the third aspect, in some implementations of the third aspect, the sending unit is further configured to send a first request message to the first network device, where the first request message is for requesting the first network device to allow the terminal device to access the second network device.

With reference to the third aspect, in some implementations of the third aspect, the sending unit is further configured to send a second request message to the second network device, where the second request message is for requesting the second network device to allow the terminal device to access the first network device.

With reference to the third aspect, in some implementations of the third aspect, the receiving unit is configured to receive a first synchronization signal sent by the first network device, where the first synchronization signal is for determining first time-frequency resource information, and receive the first information on the first time-frequency resource information.

With reference to the third aspect, in some implementations of the third aspect, the first time-frequency resource information is associated with second time-frequency resource information, and the sending unit is configured to send the second information on the second time-frequency resource information.

With reference to the third aspect, in some implementations of the third aspect, the apparatus includes: the receiving unit is configured to receive first indication information sent by the first network device, and the sending unit is configured to send third information to the first network device based on the first indication information, where the third information is for determining whether the terminal device accesses the second network device.

With reference to the third aspect, in some implementations of the third aspect, the first indication information indicates a third time-frequency resource, and the sending unit is specifically configured to send the third information to the first network device on the third time-frequency resource.

With reference to the third aspect, in some implementations of the third aspect, the first indication information indicates a time window, and
the sending unit is specifically configured to send the third information to the first network device in the time window.

With reference to the third aspect, in some implementations of the third aspect, the receiving unit is further configured to receive a third acknowledgement message sent by the first network device, where the third acknowledgement message indicates the terminal device to send a random access channel RACH.

With reference to the third aspect, in some implementations of the third aspect, the sending unit is further configured to send fourth information to the first network device, where the fourth information is associated with the RACH, and the fourth information includes at least one of the following: power, a space domain filter, a time-frequency resource, and a sequence that is of the RACH.

With reference to the third aspect, in some implementations of the third aspect, the sending unit is further configured to send a third request message to the first network device, where the third request message is for requesting the first network device to allow the terminal device to send the RACH.

With reference to the third aspect, in some implementations of the third aspect, the sending unit is further configured to send the RACH to the second network device.

With reference to the third aspect, in some implementations of the third aspect, the receiving unit is further configured to receive a random access response RAR sent by the second network device.

With reference to the third aspect, in some implementations of the third aspect, the receiving unit is further configured to receive a fourth acknowledgement message sent by the first network device, where the fourth acknowledgement message is for determining to send identification information of the terminal device to the second network device.

With reference to the third aspect, in some implementations of the third aspect, the apparatus further includes: a processing unit, configured to determine fifth information based on the RAR, and the sending unit is configured to send the fifth information to the first network device, where the fifth information includes a time-frequency resource and/or the MCS for sending the identification information of the terminal device.

With reference to the third aspect, in some implementations of the third aspect, the sending unit is further configured to send a fourth request message to the first network device based on the RAR, where the fourth request is used by the terminal device to request to send the identification information of the terminal device to the second network device.

With reference to the third aspect, in some implementations of the third aspect, the apparatus includes: the receiving unit is configured to receive second indication information sent by the second network device, and the sending unit is configured to send sixth information to the second network device based on the second indication information, where the sixth information is for determining whether the terminal device accesses the first network device.

With reference to the third aspect, in some implementations of the third aspect, the second indication information indicates the third time-frequency resource, and the sending unit is specifically configured to send the sixth information to the second network device on the third time-frequency resource.

With reference to the third aspect, in some implementations of the third aspect, the second indication information indicates a time window, and
the sending unit is specifically configured to send the sixth information to the second network device in the time window.

With reference to the third aspect, in some implementations of the third aspect, the receiving unit is further configured to receive a fifth acknowledgement message sent by the second network device, where the fifth acknowledgement message indicates the terminal device to send a random access channel RACH.

With reference to the third aspect, in some implementations of the third aspect, the sending unit is further configured to send seventh information to the first network device, where the seventh information is associated with the RACH, and the seventh information includes at least one of the following: power, a space domain filter, a time-frequency resource, and a sequence that is of the RACH.

With reference to the third aspect, in some implementations of the third aspect, the sending unit is further configured to send a fifth request message to the second network device, where the fifth request message is for requesting the second network device to allow the terminal device to send the RACH.

With reference to the third aspect, in some implementations of the third aspect, the sending unit is further configured to send the RACH to the first network device.

With reference to the third aspect, in some implementations of the third aspect, the receiving unit is further configured to receive a random access response RAR sent by the first network device.

With reference to the third aspect, in some implementations of the third aspect, the receiving unit is further configured to receive a sixth acknowledgement message sent by the second network device, where the sixth acknowledgement message is for determining to send the identification information of the terminal device to the first network device.

With reference to the third aspect, in some implementations of the third aspect, the apparatus includes: the processing unit is configured to determine eighth information based on the RAR, and the sending unit is configured to send the eighth information to the first network device, where the eighth information includes the time-frequency resource and/or the MCS for sending the identification information of the terminal device.

With reference to the third aspect, in some implementations of the third aspect, the sending unit is further configured to send a sixth request message to the second network device based on the RAR, where the sixth request includes the identification information of the terminal device.

According to a fourth aspect, a communication apparatus is provided. The apparatus includes: a receiving unit, configured to receive second information sent by a terminal device, where the second information is determined based on first information, and the first information is sent by a first network device to the terminal device; and a processing unit, configured to perform data transmission based on the second information, where the first network device is an interference device of the terminal device, and the second network device is a service device of the terminal device. A sending unit of the communication apparatus is configured to send a second acknowledgement message to the terminal device, where the second acknowledgement message indicates that the terminal device is allowed to access the first network device

With reference to the fourth aspect, in some implementations of the fourth aspect, the associating the second information with a first reference signal includes: The second network device determines the second information based on the first reference signal.

With reference to the fourth aspect, in some implementations of the fourth aspect, the sending unit is configured to send a second reference signal to the terminal device, where there is a first spatial relationship between the second reference signal and the first reference signal, and the first spatial relationship indicates a sending manner of the first reference signal.

With reference to the fourth aspect, in some implementations of the fourth aspect, the second information includes at least one of the following: a time-frequency resource, a modulation and coding scheme MCS, a precoding matrix indicator PMI, power, a quantity of flows, a beam direction, and an identifier of a serving terminal device of the first network device.

With reference to the fourth aspect, in some implementations of the fourth aspect, the receiving unit is configured to receive a second request message sent by the terminal device, where the second request message is for requesting the second network device to allow the terminal device to access the first network device.

With reference to the fourth aspect, in some implementations of the fourth aspect, the first network device is a service device of the terminal device, the second network device is an interference device of the terminal device, and the receiving unit is configured to receive fourth information sent by the terminal device, where the fourth information is associated with a random access channel RACH. The fourth information includes at least one of the following: power, a space domain filter, a time-frequency resource, and a sequence that is of the RACH.

With reference to the fourth aspect, in some implementations of the fourth aspect, the receiving unit is further configured to receive the RACH from the terminal device.

With reference to the fourth aspect, in some implementations of the fourth aspect, the sending unit is further configured to send a random access response RAR to the terminal device.

With reference to the fourth aspect, in some implementations of the fourth aspect, the apparatus includes: the sending unit is configured to send second indication information to the terminal device, and the receiving unit is configured to receive sixth information sent by the terminal device based on the second indication information, where the sixth information is for determining whether the terminal device accesses the first network device.

With reference to the fourth aspect, in some implementations of the fourth aspect, the second indication information indicates a third time-frequency resource, and the receiving unit is specifically configured to receive the sixth information sent by the terminal device on the third time-frequency resource.

With reference to the fourth aspect, in some implementations of the fourth aspect, the first indication information indicates a time window, and the receiving unit is specifically configured to receive the sixth information sent by the terminal device in the time window.

With reference to the fourth aspect, in some implementations of the fourth aspect, the sending unit is configured to send a fifth acknowledgement message to the terminal device, where the fifth acknowledgement message indicates the terminal device to send a random access channel RACH.

With reference to the fourth aspect, in some implementations of the fourth aspect, the receiving unit is configured to receive a fifth request message sent by the terminal device, where the fifth request message is for requesting the second network device to allow the terminal device to send the RACH.

With reference to the fourth aspect, in some implementations of the fourth aspect, the sending unit is further configured to send a sixth acknowledgement message to the terminal device, where the sixth acknowledgement message is for determining to send identification information of the terminal device to the first network device.

With reference to the fourth aspect, in some implementations of the fourth aspect, the receiving unit is further configured to receive eighth information sent by the terminal device, where the eighth information is determined by the terminal device based on a RAR, and the eighth information includes a time-frequency resource and/or the MCS for sending the identification information of the terminal device.

With reference to the fourth aspect, in some implementations of the fourth aspect, the receiving unit is further configured to receive a sixth request message sent by the terminal device based on the RAR, where the sixth request message is used by the terminal device to request to send the identification information of the terminal device to the first network device.

According to a fifth aspect, a communication apparatus is provided. The apparatus includes: a memory, configured to store a computer program; and a processor, configured to execute the computer program stored in the memory, so that the communication apparatus performs the method in any possible implementation of the first aspect, or performs the method in any possible implementation of the second aspect.

According to an sixth aspect, a computer-readable storage medium is provided. The computer-readable storage medium stores a computer program. When the computer program runs on a computer, the computer is enabled to perform the method in any possible implementation of the first aspect, or perform the method in any possible implementation of the second aspect.

According to a seventh aspect, a chip system is provided. The chip system includes: a processor, configured to invoke a computer program from a memory and run the computer program, so that a communication device in which the chip system is installed performs the method in any possible implementation of the first aspect, or performs the method in any possible implementation of the second aspect.

According to a eighth aspect, a communication system is provided. The communication system includes the communication apparatus in any possible implementation of the third aspect, the communication apparatus in any possible implementation of the fourth aspect.

### BRIEF DESCRIPTION OF DRAWINGS

FIG. 1 is a schematic diagram of a structure of a communication system to which a communication method according to an embodiment of this application is applicable;
FIG. 2 is a flowchart of contention-based random access in an LTE system and a 5G system;
FIG. 3 is a flowchart of non-contention-based random access in an LTE system and a 5G system;
FIG. 4 is a schematic flowchart of a communication method according to an embodiment of this application;
FIG. 5 is a schematic flowchart of a communication method according to another embodiment of this application;
FIG. 6 is a schematic flowchart of a communication method according to another embodiment of this application;
FIG. 7 is a schematic flowchart of a communication method according to another embodiment of this application;
FIG. 8 is a schematic flowchart of a communication method according to another embodiment of this application;
FIG. 9 is a schematic flowchart of a communication method according to another embodiment of this application;
FIG. 10 is a schematic flowchart of a communication method according to another embodiment of this application;
FIG. 11a is a schematic diagram of a timeline according to an embodiment of this application;
FIG. 11b is a schematic diagram of another timeline according to an embodiment of this application;
FIG. 11c is a schematic diagram of another trigger according to an embodiment of this application;
FIG. 11d is a schematic diagram of another trigger according to an embodiment of this application;
FIG. 12 is a schematic block diagram of an example of a communication apparatus according to this application;
FIG. 13 is a schematic block diagram of another example of a communication apparatus according to this application;
FIG. 14 is a schematic block diagram of another example of a communication apparatus according to this application; and
FIG. 15 is a schematic diagram of a structure of an example of a communication apparatus according to this application.

### DESCRIPTION OF EMBODIMENTS

The following describes technical solutions of this application with reference to accompanying drawings.

It should be understood that names of all nodes and information in this application are merely names set for ease of description in this application, and names may be different in an actual network. Details are not described below again.

The technical solutions of embodiments of this application may be applied to various communication systems, such as a global system for mobile communication (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communication system, a future 5th generation (5th Generation, 5G) system, or a new radio (New Radio, NR) system.

The technical solutions provided in this application may be further applied to a future communication system, for example, a sixth generation mobile communication system. This is not limited in this application.

The technical solutions provided in this application may also be applied to a machine type communication (machine type communication, MTC) network, a long term evolution-machine (Long Term Evolution-machine, LTE-M) network, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-X (vehicle-to-X, V2X, where X may represent everything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

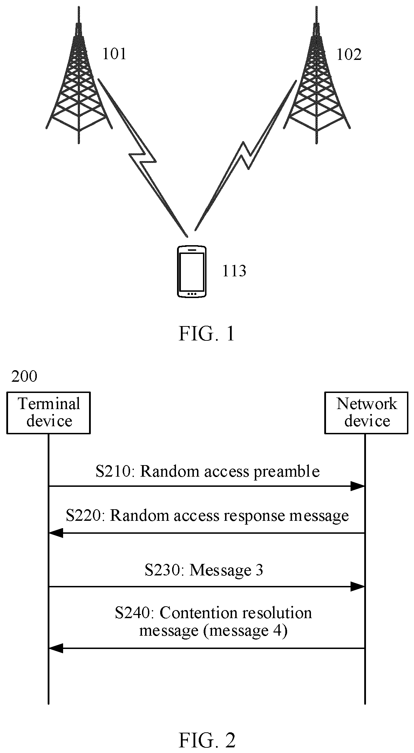

For ease of understanding of embodiments of this application, a communication system to which embodiments of this application are applicable is first described with reference to FIG. 1. As shown in FIG. 1, the communication system 100 may include at least two network devices, for example, a network device 101 and a network device 102 shown in FIG. 1. The communication system 100 may further include at least one terminal device, for example, a terminal device 113 shown in FIG. 1. A plurality of antennas may be configured for each of the network device and the terminal device. The network device and the terminal device may communicate with each other by using a multi-antenna technology.

It should be understood that the communication system shown in FIG. 1 may be used in an indoor deployment scenario, or may be used in an outdoor deployment scenario. Details are not described in embodiments of this application.

It should be understood that FIG. 1 is merely an example for description, and this application is not limited thereto. For example, embodiments of this application may be further applied to any communication scenario in which data (or a data block) needs to be repeatedly sent.

It should be further understood that the network device in the communication system may be any device that has a wireless transceiver function. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a Home evolved NodeB, or a Home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), a transmission reception point (transmission reception point, TRP), or the like. The device may alternatively be a gNB or a transmission point (TRP or TP) in a 5G system, for example, an NR system, or one or a group of antenna panels (including a plurality of antenna panels) of a base station in the 5G system, or the device may alternatively be a network node that constitutes a gNB or a transmission point, for example, a baseband unit (BBU) or a distributed unit (distributed unit, DU).

In some deployments, the gNB may include a central unit (central unit, CU) and the DU. The gNB may further include an active antenna unit (active antenna unit, AAU for short). The CU performs some functions of the gNB, and the DU performs some functions of the gNB. For example, the CU is responsible for processing a non-real-time protocol and service, and implements functions of an RRC and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be further understood that a terminal device in the communication system may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

For ease of understanding, the following first briefly describes several terms in this application.

### 1. Sounding reference signal (sounding reference signal, SRS)

An uplink channel is generally measured based on the SRS. To be specific, the SRS is sent by UE, and a gNB performs measurement, to obtain channel/interference information of uplink transmission. SRSs may also be classified into a periodic SRS (P-SRS), a semi-persistent SRS (SP-SRS), and an aperiodic SRS (A-SRS). Transmission of the P-SRS is configured by radio resource control (radio resource control, RRC), and is sent once at an interval of a fixed periodicity. The SP-SRS is triggered by a MAC control element (contention resolution identity MAC CE), and is also sent once at an interval of a fixed periodicity after being triggered. The A-SRS is triggered by downlink control information (downlink control information, DCI), and the specified SRS is sent in a specified slot after being triggered.

A plurality of pieces of SRS transmission may be configured for one UE. Generally, different SRS transmission cannot be simultaneously sent. For one SRS, positions of last several symbols (a maximum of the last six symbols) in one slot in time domain is configurable in frequency domain, and may be on a broadband or a narrowband. In addition, the SRS supports frequency hopping transmission. In other words, a same SRS may occupy different band resources in different transmission occasions (occasions).

### 2. Spatial relationship

The spatial relationship may be a relationship between spatial behavior used by a communication device when the communication device receives or sends different information. The spatial relationship may be configured or predefined. For example, the spatial relationship is configured as different space filters or a same space filter. When the spatial relationship is configured as the same space filter, the communication device uses, based on configuration of the spatial relationship, the same space filter when the communication device sends or receives different signals. For example, if information A and information B are configured to meet the spatial relationship, and a space filter used by a terminal device to send or receive the information A is a space filter A, the terminal device may determine, based on the information A and the configured spatial relationship, that a space filter for sending or receiving the information B is also the space filter A.

### 3. Last DCI

The last DCI may be understood as DCI that is the last. For determining of the last DCI, a conventional technology has the following specifications: Specification 1: If all pieces of DCI belong to one cell, the pieces of DCI are sorted in a time sequence. In other words, DCI that is the last is the last DCI. Specification 2: If pieces of DCI exist in different cells at same time, the pieces of DCI are sorted in ascending order of cell indexes (cell indexes). In other words, DCI with a largest cell index is the last DCI. It should be noted that the first two specifications may alternatively be used in combination.

### 4. Time unit

The time unit is a time domain unit used for information transmission, and may include a time domain unit such as a radio frame (radio frame), a subframe (subframe), a slot (slot), a mini-slot (mini-slot), or at least one orthogonal frequency division multiplexing (Orthogonal Frequency Division Multiplexing, OFDM) symbol. The OFDM may also be referred to as a time domain symbol for short. Slots in different formats may include different quantities of time domain symbols. In this application, an example in which one time unit is one slot is used for description, but this is not limited thereto.

One slot may include a plurality of time domain symbols, and the slots in different formats may include the different quantities of time domain symbols. For example, a slot in one format may include 14 time domain symbols, or a slot in one format may include 12 time domain symbols, or a slot in one format includes seven time domain symbols. All time domain symbols in the slot may be used as uplink symbols. All time domain symbols in the slot may be used as downlink symbols. Time domain symbols in the slot may include some uplink symbols, some downlink symbols, and some flexible symbols. The uplink symbol is used for uplink transmission, the downlink symbol is used for downlink transmission, and the flexible time domain symbol may be flexibly configured for uplink transmission or downlink transmission. It should be understood that the foregoing examples are merely an example for description, and should not constitute any limitation on this application.

### 5. Contention-based random access

A terminal device may implement synchronization with a network device in a random access process. FIG. 2 is a message interaction diagram of an existing contention-based random access process. As shown in FIG. 2, the process mainly includes four steps.

S210: A terminal device sends a random access request to a network device, where the random access request may also be referred to as a message 1 (Msg1), and the terminal device sends a random access preamble (preamble) on a time-frequency resource occupied by the random access request.

Correspondingly, the network device receives the preamble, learns that the terminal device requests access, and further performs the following step S220.

S220: The network device sends a random access response (random access response, RAR) message to the terminal device, where the RAR message may also be referred to as a message 2 (Msg2).

A RAR may include the following content: (1) a random access preamble identifier (random access preamble identifier, RAPID), where the RAPID is a preamble identifier (preamble identifier) obtained when the network device detects the preamble, and the preamble identifier may also be referred to as a preamble index; (2) a timing advance command (timing advance command, TA command), where the TA command is for specifying a time adjustment (also referred to as a timing advance) required by the terminal device to perform uplink synchronization; (3) uplink grant information (UL grant), where the UL grant is for specifying an uplink resource that is allocated by the network device to the terminal device for sending a message 3 (Msg3), and Msg3 is for carrying identification information of the terminal device; and (4) a temporary cell radio network temporary identity (temporary cell radio network temporary identity, TC-RNTI), use for subsequent data transmission between the terminal device and the network device.

Correspondingly, the terminal device obtains, through calculation, a random access radio network temporary identifier (random access radio network temporary identifier, RA-RNTI) via a time-frequency resource for sending the preamble, and monitors, in a RAR time window, a physical downlink control channel (physical downlink control channel, PDCCH) scrambled by using the RA-RNTI, to receive a RAR corresponding to the RA-RNTI. When the terminal device performs decoding by using the RA-RNTI and successfully receives the RAR, and a RAPID value in the RAR is the same as an index value used when the terminal device sends the preamble, it is considered that the RAR is successfully received. The terminal device starts to process the TA command, the UL grant, and the TC-RNTI that are included in the RAR. If the terminal device does not receive the RAR for the preamble in the RAR time window, it is considered that the RAR fails to be received. Subsequently, return to S210 to perform the contention-based random access again.

S230: The terminal device sends, based on the RAR and on the uplink resource allocated by the network device, Msg3 to the network device by using the timing advance indicated by the network device.

Specifically, after sending Msg3, the terminal device starts or restarts a contention resolution timer. Msg3 includes an identifier of the terminal device. The identifier of the terminal device is to be used for contention resolution in S240. The identifier of the terminal device may be related to a status of the terminal device in a communication system. For example, when the terminal device is in an RRC connected (RRC_CONNECTED) mode, the identifier of the terminal device may be a cell radio network temporary identifier (cell radio network temporary identifier, C-RNTI). When the terminal device is in a non-RRC connected mode, the identifier of the terminal device may be a terminal device identifier from a core network. Optionally, the terminal device identifier from the core network may be a system architecture evolution temporary mobile station identifier (system architecture evolution temporary mobile station identifier, S-TMSI) or a random number.

S240: The network device sends a message 4 (Msg4 for short) to the terminal device, where Msg4 is for carrying a contention resolution message, to indicate that the contention resolution succeeds.

Optionally, the contention resolution information may be a UE contention resolution identity MAC control element (contention resolution identity MAC CE), that is, a part of or all content of Msg3. The contention resolution information may alternatively be a PDCCH scrambled by using the cell radio network temporary identifier (cell radio network temporary identifier, C-RNTI), that is, when detecting the PDCCH scrambled by using the C-RNTI, the terminal device considers that the contention resolution is implemented. Correspondingly, the terminal device waits for receiving Msg4 in the contention resolution timer. If the contention resolution timer expires and the terminal device has not received the contention resolution information, return to S210 to perform 4-step contention-based random access again.

### 6. Non-contention-based random access

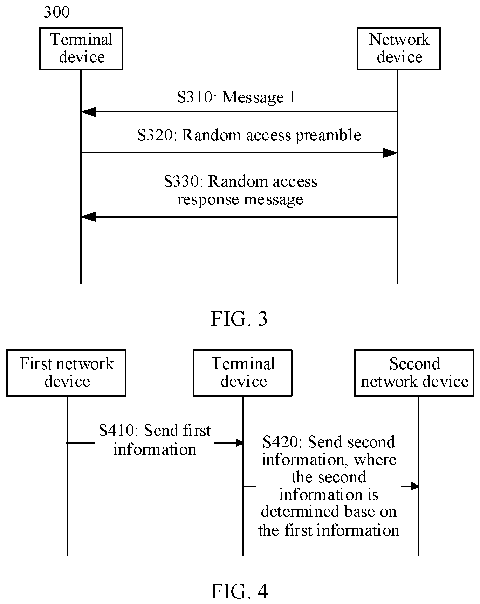

The non-contention-based random access uses a dedicated random access resource and preamble. Therefore, no contention or conflict exists. FIG. 3 is a message interaction diagram of an existing non-contention-based random access process. As shown in FIG. 3, the process mainly includes three steps.

S310: A network device sends, to a terminal device, a preamble and a physical random access channel (physical random access channel, PRACH) resource (Msg0) that are required for non-contention-based random access.

S320: The terminal device sends a random access preamble (Msg1) to the network device.

For example, if a plurality of PRACH channel resources are specified, the UE randomly selects, from three consecutive and available subframes that have the PRACH channel resources, a specified PRACH channel resource to carry Msg1. It should be noted that MAC processing on a base station side is the same as a contention-based random access process.

S330: The network device sends a random access response message to the terminal device, where the RAR message may also be referred to as a message 2 (Msg2). It should be noted that MAC processing on a base station side is the same as a contention-based random access process.

FIG. 4 is a schematic flowchart of a communication method according to this application. The communication method is applicable to the communication system shown in FIG. 1, and specifically includes the following steps.

S410: A first network device sends first information to a terminal device. Correspondingly, the terminal device receives the first information sent by the first network device.

S420: The terminal device sends second information to a second network device, where the second information is determined based on the first information. Correspondingly, the second network device receives the second information sent by the terminal device.

In embodiments of this application, a relationship between the first network device, the second network device, and the terminal device may be classified into the following two possible cases: Case 1: The first network device is a service device of the terminal device, and the second network device is an interference device of the terminal device. Case 2: The first network device is an interference device of the terminal device, and the second network device is a service device of the terminal device.

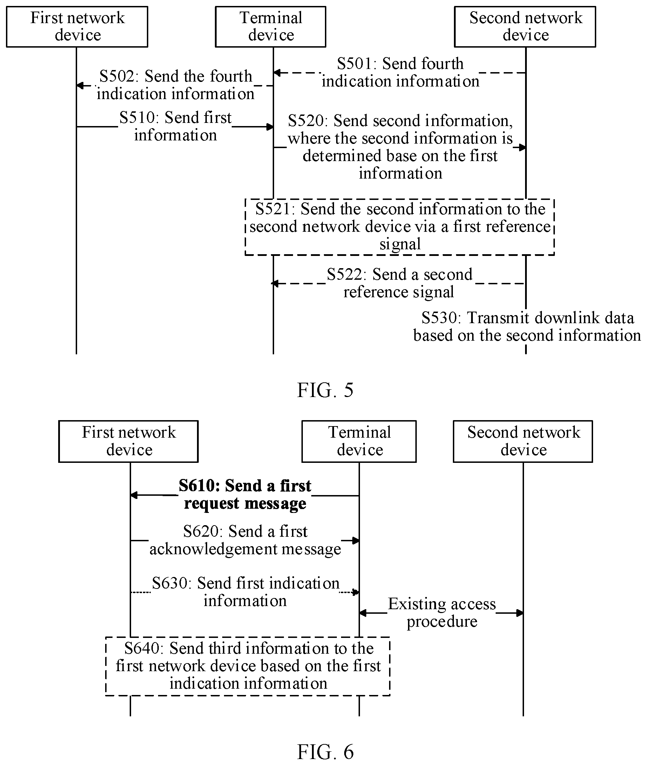

The following describes in detail a schematic flowchart of a communication method according to an embodiment of this application with reference to FIG. 5. The method is applicable to the scenario described in the foregoing Case 1. To be specific, for a terminal device, a first network device is a service device, and a second network device is an interference device. For ease of description, in the embodiment shown in FIG. 5, the first network device is referred to as the service device, and the second network device is referred to as the interference device. The method specifically includes the following steps.

S510: The service device sends first information to the terminal device. Correspondingly, the terminal device receives the first information sent by the service device.

Specifically, the first information may indicate at least one of the following: a time-frequency resource, a modulation and coding scheme (modulation and coding scheme, MCS), a precoding matrix indicator (precoding matrix indicator, PMI), power, a quantity of flows, a beam direction, an identifier of the terminal device identifier, an identifier of an SRS, an identifier of SRS configuration information, and a resource occupation ratio. The time-frequency resource may be a time domain resource, may be a frequency domain resource, or may be a time domain resource and a frequency domain resource. The resource occupation ratio is a ratio of a size of a frequency domain resource to an entire bandwidth part. For example, when the resource occupation ratio is 1/10, this may be understood as that a time-frequency resource indicated by the first information accounts for 1/10 of the entire bandwidth part (bandwidth part, BWP). When a size of the BWP is 100 resource blocks (resource blocks, RBs), the frequency domain resource indicated by the first information includes 10 RBs.

It should be noted that the first information may be carried in DCI, or may be carried in RRC signaling or a MAC CE. This is not limited in this application.

In a possible implementation, the first information may indicate the beam direction. Specifically, the beam direction may be H1*P1, where H1 represents a channel between the service device and the terminal device, and P1 represents a precoding matrix corresponding to downlink data transmitted by the service device.

In a possible implementation, the first information may indicate the quantity of flows, and the quantity of flows may also be understood as a quantity of layers. The quantity of flows may be indicated based on a port (port). A quantity of ports corresponds to the quantity of layers. A correspondence between the quantity of ports and the quantity of layers may be configured, or may be predefined. For example, the quantity of ports and the quantity of layers are configured to be the same. Specifically, the service device configures four ports for the terminal device. If there are three layers for the service device to transmit the downlink data, the terminal device selects three ports from the four ports to send the downlink data. Optionally, M ports may be ports corresponding to DMRSs. The port may indicate a quantity of layers of data, and may be a logical port.

It should be understood that the first information may alternatively indicate the MCS, the PMI, the power, the identifier of the terminal device, the identifier of the SRS, the identifier of the SRS configuration information, and the like. For brevity, details are not described herein again.

Optionally, before S510, the method may further include S501 and/or S502. S501: The interference device sends fourth indication information to the terminal device, where the fourth indication information requests the terminal device to send second information. S502: The terminal device sends the fourth indication information to the service device. After receiving the fourth indication information, the service device sends the first information to the terminal device.

It should be understood that S502 is an optional step. After receiving the fourth indication information (where the fourth indication information requests the terminal device to send the second information) sent by the interference device, the terminal device may not forward the fourth indication information to the service device. That is, the terminal device may directly request the service device to send the first information.

S520: The terminal device sends the second information to the interference device, where the second information is determined based on the first information. Correspondingly, the interference device receives the second information from the terminal device.

Specifically, the second information may include at least one of the following: a time-frequency resource, an MCS, a PMI, power, a quantity of flows (a quantity of layers), a beam direction, an identifier of the terminal device, an identifier of an SRS, an identifier of SRS configuration information, and a resource occupation ratio.

That the second information is determined based on the first information may be understood as the following two cases.
(I) A frequency domain resource indicated by the second information is the same as the frequency domain resource indicated by the first information, which is understood as that the first information indicates the frequency domain resource indicated by the second information, or is understood as that the second information indicates the frequency domain resource indicated by the first information. For example, if the first information indicates the frequency domain resource, and frequency domain resources indicated by the first information are an RB 10 and an RB 12, frequency domain resources indicated by the second information are the frequency domain resources RB 10 and RB 12 indicated by the first information. It should be understood that when the frequency domain resources indicated by the first information and the second information are the same, content of the first information and the second information may be the same, or content of the first information and the second information is not completely the same. For example, the content of the first information includes the content of the second information and content other than the content of the second information. Alternatively, the content of the second information includes the content of the first information and content other than the content of the first information.
(II) There is a mapping relationship between the first information and the second information. The terminal device may determine the second information based on the first information and the mapping relationship.

For example, the first information and the second information indicate time-frequency resources. There is a mapping relationship between the second information and the first information for the time-frequency resource. For example, different values of the first information indicate different time-frequency resources, different values of the second information indicate different time-frequency resources, and the value of the first information and the value of the second information meet a mapping relationship. The mapping relationship enables the first information and the second information to indicate a same time-frequency resource. Table 1 shows an example of the mapping relationship.

As shown in Table 1, there is a mapping relationship (a correspondence) between a bit value of the first information and a bit value of the second information in Table 1. For example, if the bit value of the first information received by the terminal device is "00", the terminal device determines, based on the mapping relationship in Table 1, that the bit value that is of the second information and that corresponds to the bit value of the first information is "11", and sends the bit value "11" of the second information to the interference device. The interference device learns of a specific frequency domain resource based on the received second information and the mapping relationship between the bit value of the second information and the frequency domain resource in Table 1. For example, the bit value "11" of the second information corresponds to the frequency domain resources RB 10 and RB 12. In this case, the interference device may learn of the specific frequency domain resources RB 10 and RB 12.

It should be understood that the specific mapping relationship (the specific correspondence) in Table 1 is merely an example for description. This is not limited in embodiments of this application.

It should be further understood that the mapping relationship (the correspondence) in Table 1 may be configured by the network device, or may be specified in a protocol. This is not limited in embodiments of this application.

**Table 1**

| First information (bit value) | Second information (bit value) | Time-frequency resource |
|---|---|---|
| 00 | 11 | RB 10 and RB 12 |
| 01 | 10 | RB 12 and RB 15 |
| 10 | 01 | RB 10 and RB 14 |
| 11 | 00 | RB 16 |

It should be understood that a specific case in which the second information is determined based on the first information is merely an example for description. Embodiments of this application are not limited thereto.

It should be noted that, in S520, the terminal device sends the second information to the interference device. A time-frequency resource occupied for sending the second information may be determined in the following manner. For ease of description, the time-frequency resource occupied for sending the second information is referred to as a time-frequency resource 2.

Manner 1: The service device directly interacts with the interference device, to determine a position of the time-frequency resource 2. In other words, the network devices set, in advance through information exchange, the time-frequency resource 2 for sending the second information.

Manner 2: The terminal device determines, by accessing the service device and the interference device and interacting with the interference device, the position of the time-frequency resource 2 for sending the second information.

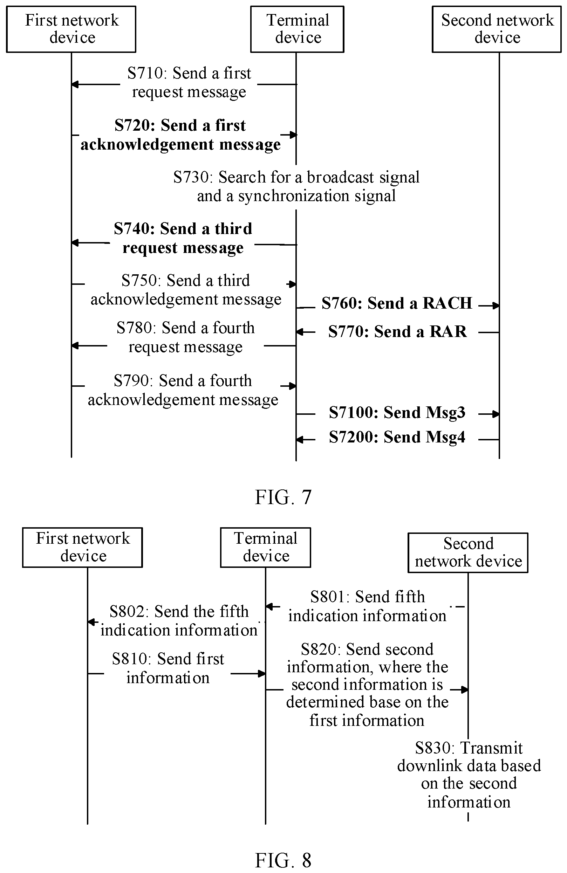

Specifically, in the foregoing Manner 1, the network devices may directly exchange the time-frequency resource occupied by the second information. However, in the foregoing Manner 2, the network devices cannot directly exchange the time-frequency resource occupied by the second information, but the time-frequency resource occupied by the second information is forwarded by the terminal device. For how the terminal device accesses the interference device when the terminal device accesses the service device and the interference device in Manner 2, this application provides an access method. Refer to FIG. 6 and FIG. 7. Details are described in detail below.

Manner 3: The terminal device receives a broadcast signal and/or a synchronization signal, for example, an SSB, sent by the interference device. Then, the position of the time-frequency resource 2 for sending the second information is determined based on the broadcast signal and/or the synchronization signal. In other words, the time-frequency resource for sending the second information is determined based on the SSB sent by the interference device. Alternatively, the time-frequency resource for sending the second information is associated with the SSB sent by the interference device. For example, the time-frequency resource for sending the second information is associated with an index (index) of the SSB sent by the interference device. For another example, the time-frequency resource for sending the second information is associated with a time-frequency resource used by the interference device for sending the SSB.

Manner 4: The terminal device receives a broadcast signal and/or a synchronization signal, for example, an SSB, sent by the interference device. Then, the terminal device sends a RACH via the SSB, and the second information is carried on a resource for sending the RACH.

Optionally, the second information may be implicitly notified based on the RACH. For example, the second information is notified based on a sequence selected for the RACH and a resource position of the RACH.

Optionally, a time-frequency resource of the RACH may be associated with the resource 2, and the second information is sent on the associated resource 2. Alternatively, a reference signal may be sent on the resource 2 associated with a time-frequency resource of the RACH, and the second information is implicitly carried based on the reference signal.

Manner 5: The terminal device receives a broadcast signal and/or a synchronization signal, for example, an SSB, sent by the interference device, and determines the time-frequency resource 2 based on the broadcast signal and/or the synchronization signal. Then, the second information is sent on the time-frequency resource 2. Alternatively, the terminal device may send a reference signal on the time-frequency resource, and the second information is further implicitly carried based on the reference signal.

It should be understood that the second information may be implicitly carried by using a sequence used by the reference signal, or a time-frequency resource occupied by the reference signal, or configuration information of the time-frequency resource occupied by the reference signal, or an identifier of the configuration information of the time-frequency resource occupied by the reference signal, or an identifier of the configuration information of the reference signal. Optionally, the reference signal may be an SRS.

In this application, the method further includes S521: The terminal device sends the second information to the interference device via a first reference signal. The second information is associated with the first reference signal. In other words, the first reference signal may also be used by the interference device to determine the second information. In other words, the terminal device may notify the interference device of the second information via the first reference signal.

That the second information is associated with the first reference signal may be understood as: (I) The second information may be information carried on the first reference signal. (II) The first reference signal may alternatively be the second information.

For example, the first reference signal may be an SRS signal, or may be another signal. This is not limited in embodiments of this application. The following mainly uses an example in which the first reference signal is an SRS for description.

In a possible implementation, the interference device may determine the second information based on a time-frequency resource on which the SRS is received. Optionally, the terminal device may determine, based on the first information, a time-frequency resource for sending the SRS. In addition, based on the first information, how to send the SRS can be determined. For example, if the first information is time-frequency resource information, and the time-frequency resources indicated by the first information is the RB 10 and the RB 12, the terminal device sends the SRS to the interference device on the time-frequency resources RB 10 and RB 12. In this method, when detecting the SRS, the interference device detects that the SRS is sent only on the time-frequency resources RB 10 and RB 12, and the interference device also learns that the service device transmits the downlink data to the terminal device on the time-frequency resources RB 10 and RB 12. Therefore, the interference device does not transmit downlink data on the time-frequency resources RB 10 and RB 12.

In a possible implementation, the service device configures SRSs of the M ports (ports) for the terminal device, for example, M = 4. If there are three layers for the service device to transmit the downlink data, the terminal device selects three ports from the four ports for sending. After receiving SRSs of the three ports, the interference device may learn that a quantity of transport flows used by the service device to send the downlink data is 3. It should be noted that the quantity of layers to transmit the downlink data may not be equal to N, or there may be a correspondence between the quantity of layers to transmit the downlink data and N. As long as the correspondence is the same among the service device, the terminal device, and the interference device, the interference device can accurately obtain the quantity of layers used by the service device to send the downlink data.

Specifically, for ease of description, the downlink data sent by the service device to the terminal device is referred to as downlink data 1 for short, and a time-frequency resource occupied by the downlink data 1 is a time-frequency resource 1. If a quantity of layers used by the service device to send the downlink data 1 is large, the interference device may choose to completely avoid the time-frequency resource on which the downlink data 1 is located. If the quantity of layers used for the first downlink data is small, the interference device may occupy the time-frequency resource 1 to transmit the data, but a quantity of layers used on the time-frequency resource 1 is small. For example, if the four ports are configured for the service device for sending the downlink data 1 to the terminal device, and a quantity of ports used by the service device to send the downlink data is 4, it means that the service device occupies all the ports to transmit the downlink data, and the interference device does not send the downlink data on the time-frequency resource 1. If a case in which M = 3 is used by the service device to transmit the downlink data, it means that the service device occupies three ports to transmit the downlink data. In this case, the interference device may send the downlink data on the time-frequency resource 1 (for example, the RB 10 and the RB 12), but the quantity of layers is 1.

In another possible implementation, the service device configures at least one SRS sequence for the terminal device. The at least one SRS sequence is associated with different second information. The terminal device notifies the interference device of different second information by sending different SRS sequences. The different SRS sequences are associated with different time-frequency resources indicated by the second information. The SRS sequence and the time-frequency resource that is indicated by the second information may be configured, or may be predefined. For example, the service device configures two SRS sequences for the terminal device: an SRS sequence 1 and an SRS sequence 2. The SRS sequence 1 is associated with a time-frequency resource 1, and the SRS sequence 2 is associated with a time-frequency resource 2. If the terminal device sends the sequence 1, it indicates that the time-frequency resource indicated in the second information is the time-frequency resource 1. If the terminal device sends the sequence 2, it indicates that the time-frequency resource indicated in the second information is the time-frequency resource 2.

In another possible implementation, the service device configures at least one SRS resource for the terminal device, where the at least one SRS resource is associated with different second information, and the terminal device notifies the interference device of the different second information by sending different SRS resources. The different SRS resources are associated with different time-frequency resources indicated by the second information. The SRS resource and the time-frequency resource that is indicated by the second information may be configured, or may be predefined. For example, the service device configures two SRS resources for the terminal device: an SRS resource 1 and an SRS resource 2. The SRS resource 1 is associated with a time-frequency resource A, and the SRS resource 2 is associated with a time-frequency resource B. If the terminal device sends the SRS on the resource 1, it indicates that the time-frequency resource indicated in the second information is the time-frequency resource A. If the terminal device sends the SRS on the resource 2, it indicates that the time-frequency resource indicated in the second information is the time-frequency resource B.

As described in the foregoing two possible implementations, the service device configures the at least one SRS resource/sequence and a correspondence between the at least one SRS resource/sequence and the time-frequency resource for the terminal device. In this case, after receiving the SRS resource/sequence, the interference device learns of the time-frequency resource corresponding to the SRS resource/sequence. For example, the interference device learns of the time-frequency resource 1 corresponding to the SRS sequence 1. Therefore, when subsequently scheduling data, the interference device avoids the time-frequency resource 1. In the foregoing manner, the interference device avoids the time-frequency resource used for communication between the service device and the terminal device, so that interference in communication between the service device and the terminal device can be reduced, and communication reliability can be improved.

It should be understood that the correspondence is not limited to a correspondence between an SRS resource/sequence and a time-frequency resource, or may be a correspondence between an SRS resource/sequence and a quantity of layers, or may be a correspondence between an SRS resource/sequence and a beam direction, or may be a correspondence between an index of SRS configuration information and second information, or may be a correspondence between an index of configuration information of an SRS resource set and second information. This is not limited in embodiments of this application.

Optionally, whether the terminal device sends the SRS is triggered by an event. In other words, the terminal device sends the SRS only when a first trigger condition is met.

For example, the first trigger condition is that the downlink data received by the terminal device and sent by the service device is decoded as a negative acknowledgement (negative acknowledgement, NACK). In other words, the terminal device sends the SRS only when the terminal device detects that the downlink data is decoded as the NACK. It should be understood that a sequence and/or a resource used for sending the SRS may be preconfigured, or may be specified in advance.

Optionally, according to step S521, the method may further include S522: The terminal device receives a second reference signal sent by the interference device, where there is a first spatial relationship between the second reference signal and the first reference signal. A function of a spatial relationship is described above. For brevity, details are not described again.

An example in which the first reference signal is the SRS is used. Because the SRS is sent to the interference device, there is the first spatial relationship between the SRS and the second reference signal. In other words, a sending manner of the SRS may be determined based on the spatial relationship between the second reference signal and the SRS. It should be understood that the second reference signal may be a broadcast signal and/or a synchronization signal sent by the interference device, or may be an SSB. This is not limited in embodiments of this application.

In a possible implementation, when the first spatial relationship is that space filters are the same, a space domain sending filter used when the terminal device sends the SRS is the same as a space domain filter for receiving the second reference signal sent by the interference device.

In a possible implementation, the space domain sending filter used when the terminal device sends the SRS is determined via the space domain filter for receiving the second reference signal. In this case, the space domain sending filter used when the terminal device sends the SRS may be different from the space domain filter for receiving the second reference signal. This is because if a frequency domain resource occupied by the second reference signal is different from a frequency domain resource occupied by the SRS, if a same filter is for receiving the second reference signal and sending the SRS, a performance loss may be caused. On this basis, this application provides the following method. The terminal device determines, based on the space domain filter for receiving the second reference signal, the space domain filter for sending the first reference signal.

Method 1: When searching for the second reference signal, the terminal device preferentially searches for the second reference signal on a frequency domain resource that is the same as that of the SRS. The same frequency domain resource may be a same cell, a same carrier, or one or more same RBs. In other words, when sending the SRS, the terminal device needs to use a space domain filter (for example, a space domain filter A) corresponding to a second reference signal carried in the cell/on the carrier/frequency unit that is the same as that of the SRS, to determine that the space domain filter A is used as a space domain filter used by the terminal device to send the SRS. Optionally, when searching for the second reference signal, the terminal device may first search for the second reference signal in a BWP in which the terminal device is located.

Optionally, according to Method 1, if the terminal device does not search for the second reference signal in the cell/on the carrier/frequency unit that is the same as that of the SRS, a space domain filter corresponding to a second reference signal in a cell/on a carrier/frequency unit that is closest to the cell/carrier/frequency unit in which the SRS is located is selected. For example, a space domain filter corresponding to a second reference signal in a cell whose index is closest to an index of the cell in which the SRS is located is selected. For example, if the index of the cell in which the SRS is located is 2, an index of a cell 1 is 5, an index of a cell 2 is 7, and an index of a cell 3 is 9, the terminal device selects a space domain filter corresponding to a second reference signal in the cell 1. Alternatively, a space domain filter corresponding to a second reference signal on a carrier whose frequency is closest to frequency GHz of the carrier on which the SRS is located is selected, or a space domain filter corresponding to a second reference signal on a frequency unit whose index is closest to an index of the frequency unit on which the SRS is located is selected. It should be understood that this is not limited in embodiments of this application.

Method 3: An association relationship between the frequency domain resource of the second reference signal and the frequency domain resource of the SRS is configured or predefined, and the terminal device determines, based on the association relationship and the second reference signal, the space domain filter used for the SRS.

For ease of description, the association relationship between the frequency domain resource of the second reference signal and the frequency domain resource of the SRS is configured or predefined, and is referred to as an association relationship 1 for short below. For example, the frequency domain resource is a frequency unit. The terminal device determines a second reference signal that is on a frequency unit 1, and may determine, based on the association relationship 1, that the space domain filter used when the terminal device sends the SRS should correspond to a space domain filter used for a second reference signal that is on a frequency unit 3. It should be understood that the foregoing association relationship 1 may be configured by the service device for the terminal device.

Optionally, the association relationship 1 may alternatively be carried in the second reference signal. In other words, after receiving the second reference signal, the terminal device parses out content of the second reference signal, and obtains the association relationship 1 based on the specific content.

It should be understood that the foregoing association relationship may alternatively be an association relationship between cells/carriers/frequency units.

For example, the following uses the frequency unit as an example for description, as shown in Table 2. The terminal device finds the second reference signal on the frequency unit 1. Based on the association relationship shown in Table 1, the space domain filter used by the terminal device to send the SRS should correspond to the second reference signal on the frequency unit 3. It should be understood that the association relationship may alternatively be the index of the SSB, the index of the cell, or any combination thereof. This is not limited in embodiments of this application.

**Table 2**

| Index | Found second reference signal | Second reference signal associated with the SRS |
|---|---|---|
| 0 | Frequency unit 1 | Frequency unit 3 |
| 1 | Frequency unit 2 | Frequency unit 1 |

It should be understood that the frequency unit may be a BWP, or may be a band (band), a carrier (carrier), a cell (cell), or the like. This is not limited in embodiments of this application.

In a possible implementation, when the second information is carried in the SRS, the interference device may further obtain a channel between the terminal device and the interference device through measurement based on the SRS.

For example, the obtained channel is a real channel between the terminal device and the interference device, that is, H.

For example, the obtained channel is an equivalent channel, that is, H*P, where P represents a precoding matrix used when the terminal device sends the SRS, and the precoding matrix P may be determined according to the following method. Specifically, a precoding matrix used for first data is P2, and a channel between the terminal device and the service device is H2. P is determined based on at least one of H2 and P2. Optionally, P = H2*P2. The first data may be data of which transmission is performed between the service device and the terminal device.

For example, it is equivalent to a case in which the terminal device sends two SRSs, where a first SRS is used by the interference device to obtain H, and a second SRS is used by the interference device to obtain H*P. Then, the interference device may obtain H and P respectively. In this way, when scheduling data, the interference device may reduce interference in the terminal device as much as possible based on H and P.

In a possible implementation, the service device configures an SRS resource set for the terminal device. That the terminal device determines the SRS based on the first information may alternatively be: determining a target SRS from the SRS resource set based on the first information, and then sending the target SRS.

In another possible implementation, a time domain resource used by the terminal device to send the SRS is associated with the first information, and the interference device may determine a time domain resource of the downlink data based on a position of the time domain resource for receiving the SRS. For example, if the first information is sent in a slotn1, and the downlink data is sent in a slot slot n2, the position of the selected time domain resource to send the SRS may be a slot (n2+k), where k may be 0, or k may be less than 0; or the position of the selected time domain resource to send the SRS may be a slot (n2-k). In this case, k may be greater than 0. After receiving the SRS in the slot (n2+k), the interference device may learn that the slot in which the downlink data is located is the slot n2.

It should be noted that a time domain symbol specifically occupied by an SRS in a slot may be determined by using a method for determining an SRS resource in the conventional technology. This is not described herein in this application.

In another implementation, the third information indicates that the SRS is sent by the terminal device to the interference device. It may be understood that the interference device is an interference device of the terminal device. In other words, the third information indicates that the SRS is a signal sent by the terminal device to the interference device.

In a possible implementation, power used by the terminal device to send the second information is determined based on a reference signal (for example, the SRS or the SSB) between the interference device and the terminal device. For example, the power used by the terminal device to send the second information is the same as power of the reference signal between the interference device and the terminal device. For another example, there is a predefined correspondence between the power used by the terminal device to send the second information and power of the reference signal between the interference device and the terminal device. The predefined relationship may be configured, or may be predefined in a protocol.

In an optional manner, after S520, the method may further include S530: The interference device transmits information based on the second information.

Specifically, after the interference device learns of the second information, that is, learns of a specific case of data transmission between the service device and the terminal device, the interference device transmits downlink data based on the second information. Because the first information is associated with the second information, in other words, the interference device may learn of related information of information transmission between the service device and the terminal device, for example, learn of a time-frequency resource for information transmission between the service device and the terminal device. On this basis, when communicating with a terminal device in coverage of the interference device, the interference device may flexibly schedule information transmission. In this way, communication performance is improved.

In a possible implementation, the second information may be information about the time-frequency resource for information transmission between the service device and the terminal device. When communicating with a terminal device served by the interference device, the interference device may flexibly configure a transmission resource. In this way, interference in the terminal device is reduced and reliability of a communication system is improved.

In a possible implementation, the second information may be an identifier of the terminal device, or the second information may be an identifier of an SRS corresponding to the terminal device. After receiving the identifier of the terminal device or the identifier of the SRS corresponding to the terminal device, the interference device may learn that the terminal device is to receive the downlink data. In addition, a channel for data transmission between the terminal device and the service device is obtained through measurement based on the SRS. Therefore, when the interference device transmits the downlink data, interference in the channel for data transmission between the terminal device and the service device is reduced. For example, the interference device learns, via the identifier of the terminal device, that the terminal device receives the downlink data on a time-frequency resource 1. An interference signal received by the terminal device may be represented as Y2 = H2*P2*X2, where Y2 represents the interference signal, H2 represents a channel between the interference device and the terminal device, P2 represents a precoding matrix corresponding to the downlink data transmitted by the interference device, and X2 represents the downlink data transmitted by the interference device. The downlink data may be transmitted by the interference device to another terminal device. In this case, the interference device uses the precoding matrix P2 when transmitting data on the time-frequency resource 1, so that H2*P2 is approximately equal to 0 or extremely small, and Y2 is extremely small or equal to 0. This reduces interference in the terminal device. In this way, the reliability of the communication system is improved.

In a possible implementation, the second information may be the beam direction. When the interference device receives the beam direction, the interference device transmits data based on the beam direction. For example, a beam direction between the service device and the terminal device may be H1*P1, and an interference signal received by the terminal device may be represented as Y2 = H2*P2*X2. In this case, a signal used by the terminal device to receive the downlink data may be represented as Y = H1*P1*X1 + H2*P2*X2, where H1 represents the channel between the service device and the terminal device, P1 represents the precoding matrix corresponding to the downlink data transmitted by the service device, and X1 represents the downlink data transmitted by the service device. According to the foregoing H1*P1, the interference device sets P2, where P2 represents a precoding matrix corresponding to the downlink data transmitted by the interference device. For example, the interference device uses the precoding matrix P2 when transmitting data on the same time-frequency resources (RB 10 and RB 12), so that H2*P2 is approximately equal to 0 or extremely small, and Y2 is extremely small or equal to 0. This reduces interference in the terminal device. In this way, the reliability of the communication system is improved.

It should be understood that the beam direction may be associated with a synchronization signal block SSB (SS/PBCH block, where the SS represents a synchronization signal, namely; and the PBCH is a physical broadcast channel) index (index) sent by the service device. In other words, the interference device may be notified of the beam direction via the SSB index. This is not limited in embodiments of this application.

In embodiments of this application, according to the foregoing method, the interference device obtains, via the terminal device, the beam direction of information transmission between the service device and the terminal device. Therefore, when communicating with the terminal device served by the interference device, the interference device may use the precoding matrix P2. In this way, the interference in the terminal device is reduced, and the reliability of the communication system is improved.

In another possible implementation, the beam direction may be the SSB index.

In another possible implementation, when the interference device learns that the SSB index = 1, to be specific, the interference device learns that a position of the terminal device is in a direction of an SSB corresponding to the SSB index = 1, when transmitting data, the interference device should transmit as few signals as possible or not transmit signals in the direction corresponding to the SSB index = 1.

In embodiments of this application, according to the foregoing method, the interference device obtains, via the terminal device, the beam direction of information transmission between the service device and the terminal device. In this case, when communicating with the terminal device served by the interference device, the interference device may transmit as few data as possible or not transmit data in the beam direction. In this way, the interference in the terminal device is reduced and the reliability of the communication system is improved.

In a case in which the terminal device accesses the interference device (the second network device), if an access procedure in the conventional technology is used, the access procedure cannot be fully applicable. For example, if the access procedure in the conventional technology is directly used, in an example, in step S220 described above, the terminal device sends a random access channel (random access channel, RACH) signal to the second network device. A time-frequency resource of the RACH signal is determined based on related information of the second network device, for example, is related to a position of a broadcast message and an SSB in the second network device. However, the service device (the first network device) does not know the information. For example, the terminal device needs to send a RACH to the second network device on a time-frequency resource RB 1. In this case, if the first network device also needs to schedule the terminal device to transmit uplink data on the time-frequency resource RB 1, the terminal device cannot access the second network device. In addition, the time-frequency resource RB 1 used by the terminal device to send the RACH to the second network device should be located in an uplink slot of the second network device. However, in the conventional technology, a frame structure configured by the first network device for the terminal device is different from a frame structure in the second network device, which also causes a problem. For example, in an uplink slot configured by the first network device for the terminal device, the second network device expects the terminal device to receive the downlink data. In this way, the terminal device receives scheduling information of the two network devices in the same uplink slot, and the terminal device cannot determine whether to perform uplink transmission or receive the downlink data. This causes a communication exception.

On this basis, this application provides the following access solutions. FIG. 6 and FIG. 7 are schematic flowcharts of access solutions 1 and 2 according to this application. Interaction between a terminal device and a second network device is mainly used as an example, and the following steps are specifically included.

According to the random access solution 1 and the random access solution 2, the terminal device accesses the second network device to implement information exchange. In this way, even if a first network device and the second network device cannot directly communicate with each other, indirect communication may be implemented via the terminal device.

S610: The terminal device sends a first request message to the first network device, where the first request message is for requesting the first network device to allow the terminal device to access the second network device.

S620: The first network device sends a first acknowledgement message to the terminal device. Correspondingly, the terminal device receives the first acknowledgement message sent by the first network device, where the first acknowledgement message indicates that the terminal device is allowed to access the second network device.

If the first network device allows (authorizes) the terminal device to access the second network device, the terminal device may access the second network device according to the foregoing random access procedure (S210 to S240) or (S310 to S330). Details are not described herein in this application.

It should be understood that S610 may be an optional step. To be specific, the terminal device may not send the first request message to the first network device. In other words, the first network device may directly send the first acknowledgement message to the terminal device to allow the terminal device to access the second network device, and the terminal device does not need to send the first request message to the first network device.

It should be further understood that S620 may alternatively be an optional step. To be specific, after the terminal device sends the first request message to the first network device, the terminal device may access the second network device, and there is no need to wait for the first network device to send the first acknowledgement message before the terminal device accesses the second network devices.

It should be further understood that, if the terminal device does not receive the first acknowledgement message in a time period T after sending the first request message to the first network device, the terminal device may send the first request message to the first network device again, that is, return to S610 to perform access again. Alternatively, if the terminal device does not receive the first acknowledgement message in a time period T after sending the first request message to the first network device, the terminal device may access the second network device, and there is no need to wait for the first network device to send the first acknowledgement message.

The time period T may be indicated by the network device to the terminal device, or may be predefined in a protocol. It should be understood that this is not limited in embodiments of this application.

Optionally, the solution 1 may further include S630: The first network device sends first indication information to the terminal device. Correspondingly, the terminal device receives the first indication information sent by the first network device.

It should be noted that S630 and S620 are performed in no particular order. To be specific, S630 may be performed before S620, or S630 and S620 may be performed simultaneously, or after S620 is performed, S630 may be performed in a process in which the terminal device accesses the second network device according to an existing random access procedure (S210 to S240). For example, S630 is performed after S210 is performed. It should be understood that this is not limited in embodiments of this application.

After S630, optionally, the solution 1 may further include S640: The terminal device sends third information to the first network device based on the first indication information, where the third information indicates whether the terminal device accesses the second network device.

In a possible implementation, the first indication information may be information A, and the information A indicates a third time-frequency resource. In this case, the terminal device may send the third information to the first network device on the third time-frequency resource. In other words, the terminal device may report, on the third time-frequency resource, whether the terminal device successfully accesses the second network device.

It should be understood that the third time-frequency resource may also be determined based on the first acknowledgement message. For example, if the terminal device receives the first acknowledgement message on a second time-frequency resource, and the second time-frequency resource is associated with the third time-frequency resource, the terminal device may determine the third time-frequency resource based on the first acknowledgement message. In this way, overheads of the first indication information are reduced.

In a possible implementation, the first indication information may alternatively be information B, and the information B indicates/configures a time window. In this case, the terminal device may send the third information to the first network device in the time window. For example, if the terminal device does not successfully access the second network device in the time window, the terminal device sends the third information to the first network device, where the third information is for determining that the terminal device does not successfully access the second network device.

In another possible implementation, the first indication information may alternatively be information B, and the information B indicates/configures a time window. In this case, the terminal device may send the third information to the first network device in the time window. For example, if the terminal device successfully accesses the second network device in the time window, the terminal device sends the third information to the first network device, where the third information is for determining that the terminal device successfully accesses the second network device.

It should be understood that the information A and the information B may be different indication information, or may be same indication information. This is not limited in embodiments of this application.

It should be understood that if the terminal device does not successfully access the second network device in the time window, optionally, the terminal device may continue to access the second network device, or may re-send the first request message to the first network device, and try to re-access the second network device according to the foregoing steps S610 and S620 and the existing random access procedure (S210 to S240). This is not limited in embodiments of this application.

It should be further understood that a start moment of the time window may be a moment at which the terminal device sends the first request message, or may be a moment after the terminal device receives the first acknowledgement message. The moment of the first request message may be a start moment or an end moment of a time-frequency resource in which the first request message is located, and the moment of the first acknowledgement message may be a start moment or an end moment of a time-frequency resource in which the first acknowledgement message is located. This is not limited in embodiments of this application.

### Solution 2

S710: A terminal device sends a first request message to a first network device, where the first request message is for requesting the first network device to allow the terminal device to access a second network device.

S720: The first network device sends a first acknowledgement message to the terminal device. Correspondingly, the terminal device receives the first acknowledgement message sent by the first network device, where the first acknowledgement message indicates that the terminal device is allowed to access the second network device.

S710 and S720 are similar to S610 and S620. For brevity, details are not described herein again in this application.

S730: The terminal device searches for a broadcast signal and a synchronization signal from the second network device.

S740: The terminal device sends a third request message to the first network device, where the third request message is for requesting the first network device to allow the terminal device to send a RACH to the second network device.

Optionally, the terminal device may further send fourth information to the first network device, where the fourth information is associated with the RACH. The fourth information includes at least one of the following: power, a space domain filter, a time-frequency resource, and a sequence that is of the RACH. It should be understood that this is not limited in embodiments of this application. The power, the space domain filter, and the time-frequency resource are power, a space domain filter, and a time-frequency resource that correspond to the RACH sent by the terminal device.

S750: The first network device sends a third acknowledgement message to the terminal device, where the third acknowledgement message indicates the terminal device to send the RACH.

It should be understood that S740 may be an optional step. In other words, the first network device may send the third acknowledgement message to the terminal device without receiving the third request message, where the acknowledgement message indicates the terminal device to send the RACH.

It should be further understood that S750 may also be an optional step. In other words, after sending the third request message, the terminal device may directly send the RACH to the second network device, and there is no need to wait for the third acknowledgement message sent by the first network device.

S760: The terminal device sends the RACH to the second network device. Correspondingly, the second network device receives the RACH from the terminal device.

S770: The second network device sends a random access response (random access response, RAR) to the terminal device. Correspondingly, the terminal device receives the RAR sent by the second network device, where the RAR is used by the terminal device to determine to establish communication with the second network device.

It should be noted that, for non-contention-based random access, non-contention-based random access may be implemented by performing a specific procedure of S710 to S770. Specifically, for a terminal device that accesses another cell, an independent time-frequency resource, sequence, and the like may be specially allocated to the terminal device, and the terminal device does not need to contend with the terminal device that belongs to the second network device.

It should be further noted that, in Solution 2, performing S710 to S770 is similar to non-contention-based random access in the conventional technology, and Solution 2 may further include S780: The terminal device sends a fourth request message to the first network device based on the RAR, where the fourth request message is used by the terminal device to request to send Msg3 to the second network device.

After S780, the method may further include S790: The first network device sends a fourth acknowledgement message to the terminal device. Correspondingly, the terminal device receives the fourth acknowledgement message sent by the first network device, and determines to send Msg3 to the second network device.

After S790, the method may further include S7100: The terminal device sends Msg3 to the second network device, where Msg3 includes an identifier of the terminal device. It should be understood that S7100 is similar to S230.

Optionally, the terminal device may further determine fifth information based on the RAR, where the fifth information is sent to the first network device, and the fifth information may include a time-frequency resource and/or an MCS for sending Msg3. It should be understood that this is not limited in embodiments of this application.

After S7100, the method may further include S7200: The second network device sends Msg4 to the terminal device, where Msg4 may include contention resolution information, to indicate that contention resolution succeeds. It should be understood that S7200 is similar to S240.

It should be understood that S780 may be an optional step. To be specific, the terminal device may not send the fourth request message to the first network device. In other words, the first network device may directly send the fourth acknowledgement message to the terminal device to determine that the terminal device sends Msg3 to the second network device, and the terminal device does not need to send the fourth request message to the first network device.

It should be further understood that S790 may alternatively be an optional step. To be specific, after the terminal device sends the fourth request message to the first network device, the terminal device may determine to send Msg3 to the second network device, and there is no need to wait for the fourth acknowledgement message sent by the first network device.

It should be further understood that sending the fifth information may also be an optional step.

It should be further understood that, if the terminal device does not receive the fourth acknowledgement message in a time period T after sending the fourth request message to the first network device, the terminal device may send the fourth request message to the first network device again, that is, return to S710 to perform access again. Alternatively, if the terminal device does not receive the fourth acknowledgement message in the time period T after sending the fourth request message to the first network device, the terminal device determines to send Msg3 to the second network device, and there is no need to wait for the first network device to send the fourth acknowledgement message.

The time period T may be indicated by the network device to the terminal device, or may be predefined in a protocol. It should be understood that this is not limited in embodiments of this application.

It should be further noted that, in Solution 2, performing S710 to S7200 is similar to contention-based random access in the conventional technology. Whether contention-based random access or non-contention-based random access similar to that in the conventional technology is specifically used may be configured by the network device.

FIG. 8 is a schematic flowchart of a communication method according to an embodiment of this application. The method is applicable to a specific scenario described in the foregoing Case 2. To be specific, for a terminal device, a first network device is an interference device, and a second network device is a service device. In the embodiment shown in FIG. 8, the first network device is referred to as the interference device, and the second network device is referred to as the service device. The method specifically includes the following steps.

S810: The interference device sends first information to the terminal device. Correspondingly, the terminal device receives the first information sent by the interference device.

For the first information, refer to related descriptions in step S510 in FIG. 5. Details are not described herein again.

S820: The terminal device sends second information to the service device, where the second information is determined based on the first information. Correspondingly, the service device receives the second information from the terminal device.

For a case in which the second information is determined based on the first information, refer to related descriptions in step S520 in FIG. 5. Details are not described herein again.

Optionally, before S810, the method may further include S801 and/or S802. S801: The service device sends fifth indication information to the terminal device, where the fifth indication information requests the terminal device to send the second information. S802: The terminal device sends the fifth indication information to the interference device. After receiving the fifth indication information, the interference device sends the first information to the terminal device.

It should be understood that S802 is an optional step. After receiving the fifth indication information (where the fifth indication information requests the terminal device to send the second information) sent by the service device, the terminal device may not forward the fifth indication information to the interference device. That is, the terminal device may directly request the interference device to send the first information.

It should be further noted that, in S810, the terminal device receives, on a first time-frequency resource, the first information sent by the interference device. A method for determining the first time-frequency resource for sending the first information is described below. For ease of description, the time-frequency resource for sending the first information is referred to as a time-frequency resource 3 below.

Manner 1: The interference device directly interacts with the service device, to determine a position of the time-frequency resource 3.

Manner 2: The terminal device accesses the interference device based on a random access solution, and determines the position of the time-frequency resource 3 by interacting with the interference device.

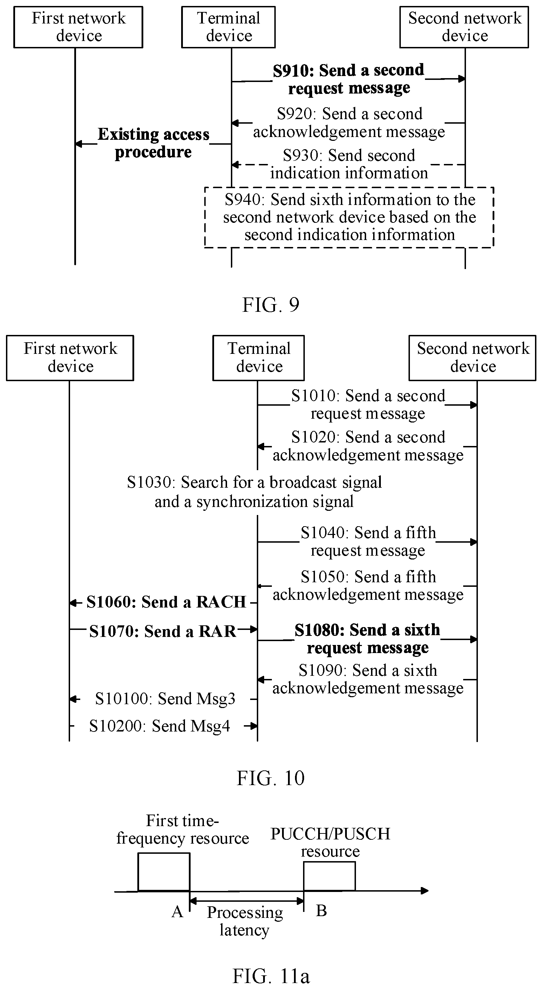

Specifically, in the foregoing Manner 1, the network devices may directly exchange the time-frequency resource occupied by the first information. However, in the foregoing Manner 2, the network devices cannot directly exchange the time-frequency resource occupied by the first information, but the time-frequency resource occupied by the first information is forwarded by the terminal device. For how the terminal device accesses the interference device when the terminal device accesses the service device and the interference device in Manner 2, this application provides an access method. Refer to FIG. 9 and FIG. 10. Details are described in detail below.

Manner 3: The terminal device receives a broadcast signal and/or a synchronization signal, for example, an SSB, sent by the interference device. Then, a position of the time-frequency resource 3 is determined based on the broadcast signal and/or the synchronization signal. In other words, the time-frequency resource 3 is determined based on the SSB sent by the interference device. Alternatively, the time-frequency resource 3 is associated with the SSB sent by the interference device.

Manner 4: The terminal device receives a broadcast signal and/or a synchronization signal, for example, an SSB, sent by the interference device. Then, the terminal device sends an RACH via the SSB.

Optionally, the first information may be implicitly notified based on the RACH. For example, the first information is notified based on a sequence selected for the RACH and a resource position of the RACH.

Optionally, a time-frequency resource of the RACH may be associated with the time-frequency resource 3, and the first information is notified on the associated time-frequency resource 3. Alternatively, a reference signal may be sent on the time-frequency resource 3 associated with a time-frequency resource of the RACH, and the first information is implicitly carried based on the reference signal.

Manner 5: The terminal device receives a broadcast signal and/or a synchronization signal sent by the interference device, and determines the time-frequency resource 3 based on the broadcast signal and/or the synchronization signal. Then, the first information is sent on the time-frequency resource 3. Alternatively, a reference signal may be sent on the time-frequency resource 3, and the first information is further implicitly carried based on the reference signal.

It should be understood that the first information may be implicitly carried by using a sequence used by the reference signal, or a time-frequency resource occupied by the reference signal, or an identifier of configuration information of the reference signal. Optionally, the reference signal may be a CSI-RS.

Optionally, in S810, in another possible implementation, the first information may alternatively be transmitted based on a reference signal. For example, the reference signal may be a CSI-RS, and a function of the CSI-RS is similar to that of the SRS described above. For example, a full-band CSI-RS may be configured. If the first information is time-frequency resource information, and downlink data occupies only an RB 10 and an RB 12, the terminal device receives, only on the RB 10 and the RB 12, the CSI-RS sent by the interference device.

Optionally, in S810, in another possible implementation, the interference device configures at least one CSI-RS sequence for the terminal device. The at least one CSI-RS sequence is associated with different first information. The terminal device receives different CSI-RS sequences from the interference device, to receive different first information.

In another possible implementation, the interference device configures at least one CSI-RS resource for the terminal device, where the at least one CSI-RS resource is associated with different first information, and the terminal device receives different CSI-RS resources from the interference device, to receive different first information.

It should be understood that the reference signal may also indicate a quantity of ports, and the like. For brevity, details are not described herein again.

In S820, the terminal device sends the second information on a second time-frequency resource. The second time-frequency resource may be determined in the following implementations. Details are as follows:
Manner 1: There is an association relationship between the second time-frequency resource and the first time-frequency resource. In other words, the second time-frequency resource may be determined based on the determined first time-frequency resource.

For example, the second information may be channel state information. After obtaining the second information, the terminal device finds a PUCCH/PUSCH that is closest to the first time-frequency resource to send the second information. Alternatively, the second information may be sent on a PUCCH/PUSCH that is closest to the first time-frequency resource, that is after the first time-frequency resource, and that meets a timeline (timeline).

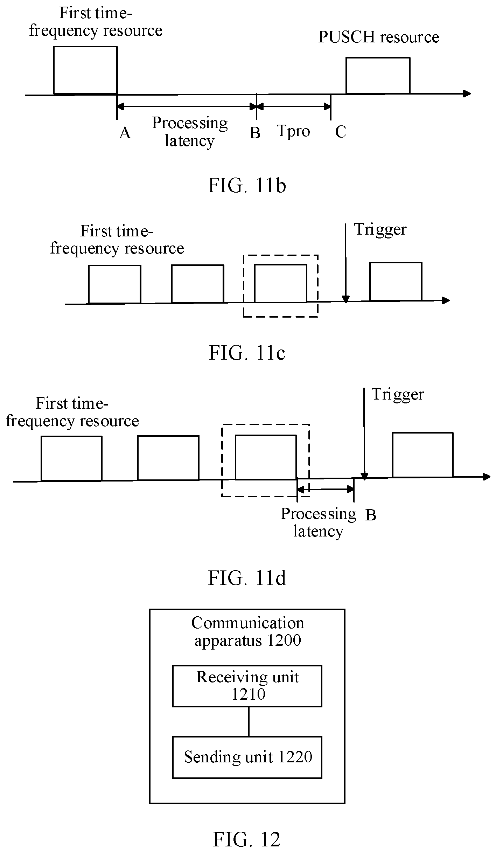

The timeline (timeline) is specified as follows:
Specification 1: A PUCCH/PUSCH carrying the second information needs to be located after second time. The second time is determined based on a first time interval and first time. The first time is a start moment of a start symbol of the first time-frequency resource, or an end moment of a last symbol of the first time-frequency resource. Without loss of generality, the second description, in other words, as shown by point A in FIG. 11a, is used in the following description. It should be understood that a function of the first time interval is used by the terminal device to process the first information, and the first time interval may be predefined in a protocol, or may be configured by the terminal device. This is not limited in embodiments of this application.
Specification 2: If a PUSCH is dynamically scheduled, as shown in FIG. 11b, DCI for scheduling the PUSCH is after a point B. Beneficial effects: As described above, if the second information is used as channel state information, transmission of the channel state information on the PUSCH is different from transmission of uplink data on the PUSCH. Therefore, specific processing and calculation are required. If the DCI for scheduling the PUSCH is after the point B, before the terminal device determines the uplink data transmitted on the PUSCH, the terminal device already knows that the second information is to be transmitted.
Specification 3: If the PUSCH is with a configured grant (configured grant), as shown in FIG. 11b, the PUSCH needs to be located after point C. C is determined based on B and Tpro, and Tpro is used by the terminal device to process the PUSCH with the configured grant. Optionally, Tpro may be 0, or may be reported by the terminal device, or may be predefined in a protocol.

In embodiments of this application, the terminal device further determines the second time-frequency resource based on the association relationship between the first time-frequency resource and the second time-frequency resource, so that signaling overheads can be reduced.

Manner 2: After determining the second information based on the first information, the terminal device waits for triggering of the service device, and then sends the second information after the triggering. Specifically, if the terminal device obtains a plurality of pieces of second information, after the triggering of the service device, the terminal device sends only latest second information. As shown in FIG. 11c, the second information sent by the terminal device is second information determined based on a time-frequency resource in a dashed box. It should be understood that, as shown in FIG. 11d, when a processing latency is considered, if a trigger moment is after a point B, the second information obtained based on the time-frequency resource in the dashed box is fed back; or if a trigger moment is not after a point B, the second information obtained based on the first time-frequency resource that meets the processing latency is fed back. This is not limited herein in this embodiment of this application. According to the method, sending of the second information is triggered only when the service device needs the second information, so that overheads of sending the second information by the terminal device are reduced.

For example, sending of the second information may be triggered by UL DCI. In other words, the second information is sent on a PUSCH. There is a bit field in the UL DCI, and the bit field indicates whether to trigger sending of the second information. The second time-frequency resource, an MCS, and the like that are for sending the second information are all indicated by the UL DCI.

For example, sending of the second information may be triggered by DL DCI. Optionally, the second information may be reported together with a HARQ-ACK codebook. Sending the second information is triggered by last DCI. In other words, the trigger moment is a moment of the last DCI.

Optionally, in a possible implementation, sending of the second information is triggered when and only when the terminal device receives the first information. For example, if the interference device currently has no data scheduling, the interference device does not send the first information on the first time-frequency resource. In this case, the terminal device does not need to send the second information. In this case, the service device should have two possible cases. In a first case, if the service device does not receive the second information, it indicates that a status of transmitting the downlink data by the interference device does not change, and interference avoidance needs to be maintained based on previous second information. In a second case, if the service device does not receive the second information, it indicates that interference avoidance does not need to be performed on the interference device. It should be understood that signaling required in the foregoing two cases needs to be configured between the interference device and the service device. It should be noted that, according to the foregoing method, overheads can be further reduced.

After S820, the method further includes S830: The service device transmits data based on the received second information.

Specifically, in S830, after the service device learns of the second information, that is, learns of a specific case of data transmission between the interference device and the terminal device served by the interference device, the service device transmits downlink data based on the second information.

In a possible implementation, the second information may be time-frequency resource information. When the service device receives the time-frequency resource information, the service device should not transmit the downlink data on a same time-frequency resource.

For example, if the interference device indicates the time-frequency resources RB 10 and RB 12 based on the first information, and after determining the second information based on the first information, the terminal device sends the second information to the service device, after obtaining the second information, the service device may avoid the time-frequency resources RB 10 and RB 12 when scheduling the downlink data. In other words, the service device does not transmit the downlink data on the RB 10 and the RB 12.

In embodiments of this application, according to the foregoing method, the service device obtains, via the terminal device, the time-frequency resource for information transmission between the interference device and the terminal device served by the interference device, for example, the frequency domain resources RB 10 and RB 12. Therefore, when the service device communicates with the terminal device, a transmission resource can be flexibly configured to reduce interference. In this way, reliability of a communication system is improved.

In a possible implementation, the second information may be an identifier of the terminal device (for example, UE 1) served by the interference device, and the identifier of the UE 1 may be associated with an SRS. For example, the identifier of the UE 1 may be associated with a resource index of the SRS, or may be associated with an index of an SRS resource set, or may be associated with a sequence used by the SRS. It should be understood that this is not limited in embodiments of this application.

Specifically, after receiving the identifier of the UE 1 or an identifier of the SRS corresponding to the UE 1, the service device may know that the UE 1 is to receive the downlink data, and obtains, through measurement based on the SRS, a channel for data transmission between the UE 1 and the interference device.

For example, the service device learns, via the identifier of the UE 1, that the UE 1 receives the downlink data on the time-frequency resources RB 10 and RB 12. An interference signal received by the UE 1 may be represented as Y2 = H2*P2*X2, where X2 represents the downlink data transmitted by the service device. The downlink data may be transmitted by the service device to the terminal device. In this case, the service device uses a precoding matrix P2 when transmitting data on same time-frequency resources (the RB 10 and the RB 12), so that H2*P2 is approximately equal to 0 or extremely small. In other words, Y2 is extremely small or equal to 0.

In embodiments of this application, according to the foregoing method, the service device obtains, via the terminal device, the channel for information transmission between the interference device and the terminal device (UE 1) served by the interference device. Therefore, when communicating with the terminal device on the same time-frequency resource, the service device may use the precoding matrix P2. In this way, interference is reduced, and the reliability of the communication system is improved.

In a possible implementation, the second information may be a beam direction. When the service device receives the beam direction, the service device transmits data based on the beam direction. For example, a beam direction of the interference device and the terminal device (for example, UE 1) served by the interference device may be H1*P1, where H1 represents the channel between the interference device and the UE 1, and P1 represents a precoding matrix corresponding to the downlink data transmitted by the interference device. According to the foregoing H1*P1, the service device sets P2, where P2 represents the precoding matrix corresponding to the downlink data transmitted by the service device.

It should be understood that the beam direction may be associated with a synchronization signal block SSB (SS/PBCH block, where the SS represents a synchronization signal, namely, a synchronization signal; and the PBCH is a physical broadcast channel, namely, a physical broadcast channel) index (index) sent by the interference device. In other words, the service device may be notified of the beam direction via the SSB index. This is not limited in embodiments of this application.

In embodiments of this application, according to the foregoing method, the service device obtains, via the terminal device, the beam direction of information transmission between the interference device and the terminal device served by the interference device. Therefore, when the service device communicates with the terminal device, the precoding matrix P2 may be used to reduce interference. In this way, the reliability of the communication system is improved.

In another possible implementation, the beam direction may be the SSB index.

In another possible implementation, when the service device learns that the SSB index = 1, to be specific, the service device learns that a position of the terminal device (for example, the UE 1) served by the interference device is in a direction of an SSB corresponding to the SSB index = 1, when transmitting data, the service device should transmit as few signals as possible or not transmit signals in the direction corresponding to the SSB index = 1.

In embodiments of this application, according to the foregoing method, the service device obtains, via the terminal device, the beam direction of information transmission between the interference device and the terminal device served by the interference device. Therefore, when communicating with the terminal device, the service device may not transmit data in the beam direction as much as possible, to reduce interference. In this way, the reliability of the communication system is improved.

For a case in which the terminal device accesses the interference device (the first network device), for the foregoing reasons, this application provides the following access solution. FIG. 9 and FIG. 10 are schematic flowcharts of an access solution 3 and an access solution 4 according to this application. Interaction between a terminal device and a first network device is mainly used as an example, and the following steps are specifically included.

According to the random access solution 3 and the random access solution 4, the terminal device accesses the first network device to implement information exchange. In this way, even if the first network device and a second network device cannot directly communicate with each other, indirect communication may be implemented via the terminal device.

### Solution 3

S910: The terminal device sends a second request message to the second network device, where the second request message is for requesting the second network device to allow the terminal device to access the first network device.

S920: The second network device sends a second acknowledgement message to the terminal device. Correspondingly, the terminal device receives the second acknowledgement message sent by the second network device, where the second acknowledgement message indicates that the terminal device is allowed to access the first network device.

It should be understood that S910 and S920 are similar to S610 and S620. For brevity, details are not described herein again in this application.

Optionally, the solution 3 may further include S930: The first network device sends second indication information to the terminal device. Correspondingly, the terminal device receives the second indication information sent by the second network device.

It should be noted that S930 and S920 are performed in no particular order. To be specific, S930 may be performed before S920, or S930 and S920 may be performed simultaneously, or after S920 is performed, S930 may be performed in a process in which the terminal device accesses the first network device according to an existing random access procedure (S210 to S240). For example, S930 is performed after S210 is performed. It should be understood that this is not limited in embodiments of this application.

After S930, optionally, the solution 3 may further include S940: The terminal device sends sixth information to the second network device based on the second indication information, where the sixth information is for determining whether the terminal device accesses the first network device.

It should be understood that S930 is similar to S630. For brevity, details are not described herein again in this application.

### Solution 4

S1010: The terminal device sends a second request message to the second network device, where the second request message is for requesting the second network device to allow the terminal device to access the first network device.

S1020: The second network device sends a second acknowledgement message to the terminal device. Correspondingly, the terminal device receives the second acknowledgement message sent by the second network device, where the second acknowledgement message indicates that the terminal device is allowed to access the first network device.

It should be understood that S 1010 and S 1020 are similar to S610 and S620. For brevity, details are not described herein again in this application.

S1030: The terminal device searches for a broadcast signal and a synchronization signal from the first network device.

S 1040: The terminal device sends a fifth request message to the second network device, where the fifth request message is for requesting the second network device to allow the terminal device to send a RACH to the first network device.

Optionally, the terminal device may further send seventh information to the first network device, where the seventh information is associated with the RACH. The seventh information includes at least one of the following: power, a space domain filter, a time-frequency resource, and a sequence that is of the RACH. It should be understood that this is not limited in embodiments of this application. The power, the space domain filter, and the time-frequency resource are power, a space domain filter, and a time-frequency resource that correspond to the RACH sent by the terminal device.

S1050: The second network device sends a fifth acknowledgement message to the terminal device, where the fifth acknowledgement message indicates the terminal device to send the RACH.

It should be understood that S1040 and S1050 are similar to S740 and S750. For brevity, details are not described herein again in this application.

S1060: The terminal device sends a RACH signal to the first network device. Correspondingly, the first network device receives the RACH from the terminal device.

S1070: The first network device sends a RAR signal to the terminal device. Correspondingly, the terminal device receives the RAR signal sent by the first network device, where the RAR signal is used by the terminal device to determine to establish communication with the first network device.

It should be noted that, for non-contention-based random access, non-contention-based random access may be implemented by performing a specific procedure of S1010 to S1070. Specifically, for a terminal device that accesses another cell, an independent time-frequency resource, sequence, and the like may be specially allocated to the terminal device, and the terminal device does not need to contend with the terminal device that belongs to the first network device.

It should be further noted that, in Solution 4, performing S1010 to S1070 is similar to non-contention-based random access in the conventional technology, and Solution 4 may further include S1080: The terminal device sends a sixth request message to the second network device based on the RAR signal, where the sixth request message is used by the terminal device to request to send Msg3 to the first network device.

After S1080, the method may further include S1090: The second network device sends a sixth acknowledgement message to the terminal device. Correspondingly, the terminal device receives the sixth acknowledgement message sent by the second network device, and determines to send Msg3 to the first network device.

After S1090, the method may further include S10100: The terminal device sends Msg3 to the first network device, where Msg3 includes an identifier of the terminal device. It should be understood that S10100 is similar to S230.

Optionally, the terminal device may further determine eighth information based on the RAR signal. The eighth information includes a time-frequency resource and/or a modulation and coding scheme MCS for sending Msg3. It should be understood that this is not limited in embodiments of this application.

After S10100, the method may further include S10200: The first network device sends Msg4 to the terminal device, where Msg4 may include contention resolution information, to indicate that contention resolution succeeds. It should be understood that S10200 is similar to S240.

It should be further understood that sending the eighth information may also be an optional step.

It should be understood that S1080 and S1090 are similar to S780 and S790. For brevity, details are not described herein again in this application.

It should be further noted that, in Solution 4, performing S1010 to S10200 is similar to contention-based random access in the conventional technology. Whether contention-based random access or non-contention-based random access similar to that in the conventional technology is specifically used may be configured by the network device.

It may be understood that, in the foregoing method embodiments, the methods and the operations that are implemented by the devices/the apparatuses may alternatively be implemented by a component (for example, a chip or a circuit) of a corresponding device/a corresponding apparatus.

The foregoing mainly describes the solutions provided in embodiments of this application from a perspective of interaction between network elements. It may be understood that, to implement the foregoing functions, each network element, for example, a transmit-end device/apparatus or a receive-end device/apparatus, includes a corresponding hardware structure and/or a corresponding software module for performing each function. A person skilled in the art may be aware that, based on the examples described in embodiments disclosed in this specification, units and algorithm steps can be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application.

In embodiments of this application, functional unit division may be performed on the transmit-end device or the receive-end device based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely logical function division. In actual implementation, another division manner may be used. Descriptions are provided below by using an example in which each functional unit is obtained through division corresponding to each function.

It should be understood that sequence numbers of the foregoing processes do not mean execution sequences in various embodiments of this application. The execution sequences of the processes should be determined based on functions and internal logic of the processes, and should not constitute as any limitation on the implementation processes of embodiments of this application.

The methods provided in embodiments of this application are described in detail above with reference to FIG. 9 to FIG. 11. Apparatuses provided in embodiments of this application are described in detail below with reference to FIG. 12 to FIG. 15. It should be understood that descriptions of apparatus embodiments correspond to the descriptions of the method embodiments. Therefore, for content that is not described in detail, refer to the foregoing method embodiments. For brevity, details are not described herein again.

FIG. 12 is a schematic block diagram of a communication apparatus according to an embodiment of this application. As shown in FIG. 12, an apparatus 1200 includes a receiving unit 1210 and a sending unit 1220.

In a possible design, the communication apparatus 1200 may correspond to the terminal device in embodiments of this application. The communication apparatus 1400 may include units configured to perform the methods performed by the terminal device in the methods 400 to 1000 in FIG. 4 to FIG. 10. In addition, the units in the communication apparatus 1200 and the foregoing other operations and/or functions are respectively used to implement corresponding procedures of the methods 400 to 1000 in FIG. 4 to FIG. 10.

It should be understood that a specific process in which the units perform the foregoing corresponding steps is described in detail in the foregoing method embodiments, and for brevity, details are not described herein again.

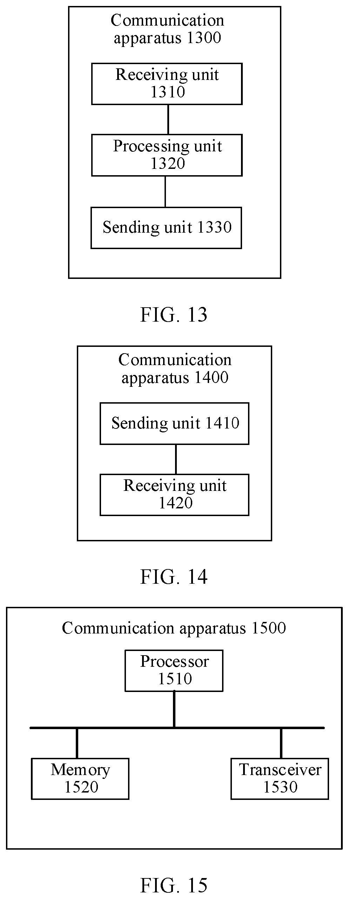

FIG. 13 is a schematic block diagram of a communication apparatus according to an embodiment of this application. As shown in FIG. 13, an apparatus 1300 includes a receiving unit 1310, a processing unit 1320, and a sending unit 1330.

In a possible design, the communication apparatus 1300 may correspond to the second network device in embodiments of this application. The communication apparatus 1300 may include units configured to perform the methods performed by the second network device in the methods 400 to 1000 in FIG. 4 to FIG. 10. In addition, the units in the communication apparatus 1300 and the foregoing other operations and/or functions are respectively used to implement corresponding procedures of the methods 400 to 1000 in FIG. 2 to FIG. 10.

It should be understood that a specific process in which the units perform the foregoing corresponding steps is described in detail in the foregoing method embodiments, and for brevity, details are not described herein again.

FIG. 14 is a schematic block diagram of a communication apparatus according to an embodiment of this application. As shown in FIG. 14, an apparatus 1400 includes a sending unit 1410 and a receiving unit 1420.

In a possible design, the communication apparatus 1400 may correspond to the first network device in the methods 400 to 1000 according to embodiments of this application. The communication apparatus 1400 may include units configured to perform the methods performed by the first network device in the methods 400 to 1000 in FIG. 4 to FIG. 10. In addition, the units in the communication apparatus 1400 and the foregoing other operations and/or functions are respectively used to implement corresponding procedures of the methods 400 to 1000 in FIG. 4 to FIG. 10.

It should be understood that a specific process in which the units perform the foregoing corresponding steps is described in detail in the foregoing method embodiments, and for brevity, details are not described herein again.

FIG. 15 is a block diagram of a structure of a communication apparatus 1500 according to an embodiment of this application. The communication apparatus 1500 shown in FIG. 15 includes a processor 1510, and may further include a memory 1520 and a transceiver 1530. The processor 1510 is coupled to the memory 1520, and is configured to execute instructions stored in the memory 1520, to control the transceiver 1530 to send a signal and/or receive a signal.

It should be understood that the processor 1510 and the memory 1520 may be integrated into one processing apparatus. The processor 1510 is configured to execute program code stored in the memory 1520 to implement the foregoing functions. During specific implementation, the memory 1520 may alternatively be integrated into the processor 1510, or may be independent of the processor 1510. It should be understood that the transceiver 1530 may correspond to each receiving unit and each sending unit in the foregoing communication apparatuses.

It should be further understood that the transceiver 1530 may include a receiver (or referred to as a receive machine) and a transmitter (or referred to as a transmit machine). The transceiver may further include an antenna. There may be one or more antennas. Alternatively, the transceiver may be a communication interface or an interface circuit.

Specifically, the communication apparatus 1500 may correspond to the terminal device in the methods 400 to 1000, the second network device in the methods 400 to 1000, or the first network device in the methods 400 to 1000 according to embodiments of this application. The communication apparatus 1500 may include a unit of a method performed by the terminal device in the methods 400 to 1000, a unit of a method performed by the second network device in the methods 400 to 1000, or a unit of a method performed by the first network device in the methods 400 to 1000. It should be understood that a specific process in which the units perform the foregoing corresponding steps is described in detail in the foregoing method embodiments, and for brevity, details are not described herein again.

When the communication apparatus 1500 is a chip, the chip includes a transceiver unit and a processing unit. The transceiver unit may be an input/output circuit or a communication interface. The processing unit may be a processor, a microprocessor, or an integrated circuit that is integrated on the chip.

In an implementation process, the steps in the foregoing methods may be completed via a hardware integrated logical circuit in the processor, or based on instructions in a form of software. The steps of the methods disclosed with reference to embodiments of this application may be directly performed and accomplished by a hardware processor, or may be performed and accomplished by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed via a hardware integrated logic circuit in the processor or based on instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and accomplished by a hardware decoding processor, or may be performed and accomplished by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

According to the methods provided in embodiments of this application, this application further provides a computer program product. The computer program product includes computer program code. When the computer program code is run on a computer, the computer is enabled to perform the method according to any one of embodiments shown in FIG. 1 to FIG. 11.

According to the methods provided in embodiments of this application, this application further provides a computer-readable medium. The computer-readable medium stores program code. When the program code is run on a computer, the computer is enabled to perform the method according to any one of embodiments shown in FIG. 1 to FIG. 11.

According to the methods provided in embodiments of this application, this application further provides a system. The system includes the foregoing apparatus or device.

Terminologies such as "component", "unit", and "system" used in this specification are used to represent computer-related entities, hardware, firmware, combinations of hardware and software, software, or software being executed. For example, the component may be but is not limited to a process that runs on a processor, a processor, an object, an executable file, an execution thread, a program, and/or a computer. As illustrated by using figures, both a computing device and an application that runs on the computing device may be components. One or more components may reside in a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

It should be understood that division of units in the foregoing apparatuses is merely logical function division. During actual implementation, all or some of the units may be integrated into one physical entity, or may be physically separated. In addition, all the units in the apparatuses may be implemented by software invoked by a processing element, or may be implemented by hardware; or some units may be implemented by software invoked by a processing element, and some modules may be implemented by hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the module. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

Optionally, the computer instructions are stored in a storage unit.

Optionally, the storage unit is a storage unit in the chip, for example, a register or a cache. Alternatively, the storage unit may be a storage unit in the terminal but outside the chip, for example, a read-only memory (Read-Only Memory, ROM) or another type of static storage device capable of storing static information and instructions, or a random access memory (Random Access Memory, RAM). Any one of the foregoing processors may be a central processing unit (central processing unit, CPU), a microprocessor, an application-specific integrated circuit (application-specific integrated circuit, ASIC), or one or more integrated circuits configured to control program execution in the transmission method. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device.

It may be understood that the memory in embodiments of this application may be a volatile memory or a nonvolatile memory, or may include both a volatile memory and a nonvolatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that, based on the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
receiving (S410, S510, S810), by a terminal device, first information sent by a first network device; and
sending (S420, S520, S820), by the terminal device, second information to a second network device, wherein the second information is determined based on the first information, wherein
the first network device is a service device of the terminal device, the second network device is an interference device of the terminal device, and the method further comprises: receiving (S620, S720), by the terminal device, a first acknowledgement message from the first network device, wherein the first acknowledgement message indicates that the terminal device is allowed to access the second network device; or
the first network device is an interference device of the terminal device, the second network device is a service device of the terminal device, and the method further comprises: receiving (S920, S1020), by the terminal device, a second acknowledgement message from the second network device, wherein the second acknowledgement message indicates that the terminal device is allowed to access the first network device.

2. The method according to claim 1, wherein
the second information is associated with a first reference signal, and the terminal device sends (5521) the second information to the second network device via the first reference signal.

3. The method according to claim 2, wherein the method further comprises:
receiving (S522), by the terminal device, a second reference signal sent by the second network device, wherein there is a first spatial relationship between the second reference signal and the first reference signal, and the first spatial relationship indicates a sending manner of the first reference signal.

4. The method according to any one of claims 1 to 3, wherein the second information comprises at least one of the following:
a time-frequency resource, a modulation and coding scheme, MCS, a precoding matrix indicator, PMI, power, a quantity of flows, a beam direction, and an identifier of a serving terminal device of the first network device.

5. The method according to any one of claims 1 to 4, wherein the first network device is the service device of the terminal device, the second network device is the interference device of the terminal device, and the method further comprises:
sending (S610, S710), by the terminal device, a first request message to the first network device, wherein the first request message is for requesting the first network device to allow the terminal device to access the second network device.

6. The method according to any one of claims 1 to 4, wherein the first network device is the interference device of the terminal device, the second network device is the service device of the terminal device, and the method further comprises:
sending (S910, S1010), by the terminal device, a second request message to the second network device, wherein the second request message is for requesting the second network device to allow the terminal device to access the first network device.

7. A communication method, comprising:
receiving (S420, S520, S820), by a second network device, second information sent by a terminal device, wherein the second information is determined based on first information, and the first information is sent by a first network device to the terminal device, wherein
the first network device is an interference device of the terminal device, and the second network device is a service device of the terminal device; and
the method further comprises:
sending (S920, S1020), by the second network device, an acknowledgement message to the terminal device, wherein the acknowledgement message indicates that the terminal device is allowed to access the first network device.

8. The method according to claim 7, wherein the second information is associated with a first reference signal, and the receiving (S420, S520, S820), by a second network device, second information sent by a terminal device comprises:
receiving (S521), by the second network device, the first reference signal sent by the terminal device; and
determining, by the second network device, the second information based on the first reference signal.

9. The method according to claim 8, wherein the method further comprises:
sending (S522), by the second network device, a second reference signal to the terminal device, wherein there is a first spatial relationship between the second reference signal and the first reference signal, and the first spatial relationship indicates a sending manner of the first reference signal.

10. The method according to any one of claims 7 to 9, wherein the second information comprises at least one of the following:
a time-frequency resource, a modulation and coding scheme, MCS, a precoding matrix indicator, PMI, power, a quantity of flows, a beam direction, and an identifier of a serving terminal device of the first network device.

11. A communication apparatus, configured to perform the method according to any one of claims 1 to 6 or 7 to 10.

12. A computer program product, wherein the computer program product comprises a computer program; and when the computer program is run, the method according to any one of claims 1 to 6 or 7 to 10 is performed.

13. A computer-readable storage medium, wherein the computer-readable storage medium stores instructions which, when the instructions are executed by a processor of a communication apparatus, cause the communication apparatus to perform the method according to any one of claims 1 to 6 or 7 to 10.

## Patentansprüche

1. Kommunikationsverfahren, das Folgendes umfasst:
Empfangen (S410, S510, S810), durch eine Endgerätevorrichtung, von durch eine erste Netzwerkvorrichtung gesendeten ersten Informationen; und
Senden (S420, S520, S820), durch die Endgerätevorrichtung, von zweiten Informationen an eine zweite Netzwerkvorrichtung, wobei die zweiten Informationen basierend auf den ersten Informationen bestimmt werden, wobei
die erste Netzwerkvorrichtung eine Dienstvorrichtung der Endgerätevorrichtung ist, die zweite Netzwerkvorrichtung eine Interferenzvorrichtung der Endgerätevorrichtung ist und das Verfahren ferner Folgendes umfasst: Empfangen (S620, S720), durch die Endgerätevorrichtung, einer ersten Quittierungsnachricht von der ersten Netzwerkvorrichtung, wobei die erste Quittierungsnachricht anzeigt, dass der Endgerätevorrichtung gestattet ist, auf die zweite Netzwerkvorrichtung zuzugreifen; oder
die erste Netzwerkvorrichtung eine Interferenzvorrichtung der Endgerätevorrichtung ist, die zweite Netzwerkvorrichtung eine Dienstvorrichtung der Endgerätevorrichtung ist und das Verfahren ferner Folgendes umfasst: Empfangen (S920, S1020), durch die Endgerätevorrichtung, einer zweiten Quittierungsnachricht von der zweiten Netzwerkvorrichtung, wobei die zweite Quittierungsnachricht anzeigt, dass der Endgerätevorrichtung gestattet ist, auf die erste Netzwerkvorrichtung zuzugreifen.

2. Verfahren nach Anspruch 1, wobei
die zweiten Informationen mit einem ersten Referenzsignal assoziiert sind und die Endgerätevorrichtung die zweiten Informationen über das erste Referenzsignal an die zweite Netzwerkvorrichtung sendet (S521).

3. Verfahren nach Anspruch 2, wobei das Verfahren ferner Folgendes umfasst:
Empfangen (S522), durch die Endgerätevorrichtung, eines durch die zweite Netzwerkvorrichtung gesendeten zweiten Referenzsignals, wobei es eine erste räumliche Beziehung zwischen dem zweiten Referenzsignal und dem ersten Referenzsignal gibt, und wobei die erste räumliche Beziehung eine Sendeweise des ersten Referenzsignals anzeigt.

4. Verfahren nach einem der Ansprüche 1 bis 3, wobei die zweiten Informationen zumindest eines aus Folgendem umfassen:
eine Zeit-Frequenz-Ressource, ein Modulations- und Codierschema, MCS, einen Vorcodierungsmatrixindikator, PMI, eine Leistung, eine Anzahl von Strömen, eine Strahlrichtung und eine Kennung einer bedienenden Endgerätevorrichtung der ersten Netzwerkvorrichtung.

5. Verfahren nach einem der Ansprüche 1 bis 4, wobei die erste Netzwerkvorrichtung die Dienstvorrichtung der Endgerätevorrichtung ist, die zweite Netzwerkvorrichtung die Interferenzvorrichtung der Endgerätevorrichtung ist und das Verfahren ferner Folgendes umfasst:
Senden (S610, S710), durch die Endgerätevorrichtung, einer ersten Anforderungsnachricht an die erste Netzwerkvorrichtung, wobei die erste Anforderungsnachricht dazu dient, bei der ersten Netzwerkvorrichtung anzufordern, der Endgerätevorrichtung zu gestatten, auf die zweite Netzwerkvorrichtung zuzugreifen.

6. Verfahren nach einem der Ansprüche 1 bis 4, wobei die erste Netzwerkvorrichtung die Interferenzvorrichtung der Endgerätevorrichtung ist, die zweite Netzwerkvorrichtung die Dienstvorrichtung der Endgerätevorrichtung ist und das Verfahren ferner Folgendes umfasst:
Senden (S910, S1010), durch die Endgerätevorrichtung, einer zweiten Anforderungsnachricht an die zweite Netzwerkvorrichtung, wobei die zweite Anforderungsnachricht dazu dient, bei der zweiten Netzwerkvorrichtung anzufordern, der Endgerätevorrichtung zu gestatten, auf die erste Netzwerkvorrichtung zuzugreifen.

7. Kommunikationsverfahren, das Folgendes umfasst:
Empfangen (S420, S520, S820), durch eine zweite Netzwerkvorrichtung, von durch eine Endgerätevorrichtung gesendeten zweiten Informationen, wobei die zweiten Informationen basierend auf ersten Informationen bestimmt werden, und wobei die ersten Informationen durch eine erste Netzwerkvorrichtung an die Endgerätevorrichtung gesendet werden, wobei
die erste Netzwerkvorrichtung eine Interferenzvorrichtung der Endgerätevorrichtung ist und die zweite Netzwerkvorrichtung eine Dienstvorrichtung der Endgerätevorrichtung ist; und
wobei das Verfahren ferner Folgendes umfasst:
Senden (S920, S1020), durch die zweite Netzwerkvorrichtung, einer Quittierungsnachricht an die Endgerätevorrichtung, wobei die Quittierungsnachricht anzeigt, dass der Endgerätevorrichtung gestattet ist, auf die erste Netzwerkvorrichtung zuzugreifen.

8. Verfahren nach Anspruch 7, wobei die zweiten Informationen mit einem ersten Referenzsignal assoziiert sind, und wobei das Empfangen (S420, S520, S820), durch eine zweite Netzwerkvorrichtung, von durch eine Endgerätevorrichtung gesendeten zweiten Informationen Folgendes umfasst:
Empfangen (S521), durch die zweite Netzwerkvorrichtung, des durch die Endgerätevorrichtung gesendeten ersten Referenzsignals; und
Bestimmen, durch die zweite Netzwerkvorrichtung, der zweiten Informationen basierend auf dem ersten Referenzsignal.

9. Verfahren nach Anspruch 8, wobei das Verfahren ferner Folgendes umfasst:
Senden (S522), durch die zweite Netzwerkvorrichtung, eines zweiten Referenzsignals an die Endgerätevorrichtung, wobei es eine erste räumliche Beziehung zwischen dem zweiten Referenzsignal und dem ersten Referenzsignal gibt, und wobei die erste räumliche Beziehung eine Sendeweise des ersten Referenzsignals anzeigt.

10. Verfahren nach einem der Ansprüche 7 bis 9, wobei die zweiten Informationen zumindest eines aus Folgendem umfassen:
eine Zeit-Frequenz-Ressource, ein Modulations- und Codierschema, MCS, einen Vorcodierungsmatrixindikator, PMI, eine Leistung, eine Anzahl von Strömen, eine Strahlrichtung und eine Kennung einer bedienenden Endgerätevorrichtung der ersten Netzwerkvorrichtung.

11. Kommunikationseinrichtung, ausgelegt zum Durchführen des Verfahrens nach einem der Ansprüche 1 bis 6 oder 7 bis 10.

12. Computerprogrammprodukt, wobei das Computerprogrammprodukt ein Computerprogramm umfasst; und wobei, wenn das Computerprogramm ausgeführt wird, das Verfahren nach einem der Ansprüche 1 bis 6 oder 7 bis 10 durchgeführt wird.

13. Computerlesbares Speichermedium, wobei das computerlesbare Speichermedium Anweisungen speichert, die, wenn die Anweisungen durch einen Prozessor einer Kommunikationseinrichtung ausgeführt werden, die Kommunikationseinrichtung veranlassen, das Verfahren nach einem der Ansprüche 1 bis 6 oder 7 bis 10 durchzuführen.

## Revendications

1. Procédé de communication, comprenant :
la réception (S410, S510, S810), par un dispositif terminal, de premières informations envoyées par un premier dispositif de réseau ; et
l'envoi (S420, S520, S820), par le dispositif terminal, de deuxièmes informations à un deuxième dispositif de réseau, les deuxièmes informations étant déterminées sur la base des premières informations,
le premier dispositif de réseau étant un dispositif de service du dispositif terminal, le deuxième dispositif de réseau étant un dispositif d'interférence du dispositif terminal, et le procédé comprenant en outre : la réception (S620, S720), par le dispositif terminal, d'un premier message d'acquittement en provenance du premier dispositif de réseau, le premier message d'acquittement indiquant que le dispositif terminal est autorisé à accéder au deuxième dispositif de réseau ; ou
le premier dispositif de réseau étant un dispositif d'interférence du dispositif terminal, le deuxième dispositif de réseau étant un dispositif de service du dispositif terminal, et le procédé comprenant en outre : la réception (S920, S1020), par le dispositif terminal, d'un deuxième message d'acquittement en provenance du deuxième dispositif de réseau, le deuxième message d'acquittement indiquant que le dispositif terminal est autorisé à accéder au premier dispositif de réseau.

2. Procédé selon la revendication 1, dans lequel
les deuxièmes informations sont associées à un premier signal de référence, et le dispositif terminal envoie (S521) les deuxièmes informations au deuxième dispositif de réseau via le premier signal de référence.

3. Procédé selon la revendication 2, lequel procédé comprend en outre :
la réception (S522), par le dispositif terminal, d'un deuxième signal de référence envoyé par le deuxième dispositif de réseau, une première relation spatiale existant entre le deuxième signal de référence et le premier signal de référence, et la première relation spatiale indiquant une manière d'envoyer le premier signal de référence.

4. Procédé selon l'une quelconque des revendications 1 à 3, dans lequel les deuxièmes informations comprennent au moins l'une des informations suivantes :
une ressource temps-fréquence, un schéma de modulation et codage, MCS, une puissance d'indicateur de matrice de précodage, PMI, une quantité de flux, une direction de faisceau, et un identifiant d'un dispositif terminal de desserte du premier dispositif de réseau.

5. Procédé selon l'une quelconque des revendications 1 à 4, dans lequel le premier dispositif de réseau est le dispositif de service du dispositif terminal, le deuxième dispositif de réseau est le dispositif d'interférence du dispositif terminal, et le procédé comprend en outre :
l'envoi (S610, S710), par le dispositif terminal, d'un premier message de demande au premier dispositif de réseau, le premier message de demande servant à demander au premier dispositif de réseau de permettre au dispositif terminal d'accéder au deuxième dispositif de réseau.

6. Procédé selon l'une quelconque des revendications 1 à 4, dans lequel le premier dispositif de réseau est le dispositif d'interférence du dispositif terminal, le deuxième dispositif de réseau est le dispositif de service du dispositif terminal, et le procédé comprend en outre :
l'envoi (S910, S1010), par le dispositif terminal, d'un deuxième message de demande au deuxième dispositif de réseau, le deuxième message de demande servant à demander au deuxième dispositif de réseau de permettre au dispositif terminal d'accéder au premier dispositif de réseau.

7. Procédé de communication, comprenant :
la réception (S420, S520, S820), par un deuxième dispositif de réseau, de deuxièmes informations envoyées par un dispositif terminal, les deuxièmes informations étant déterminées sur la base de premières informations, et les premières informations étant envoyées par un premier dispositif de réseau au dispositif terminal,
le premier dispositif de réseau étant un dispositif d'interférence du dispositif terminal, et le deuxième dispositif de réseau étant un dispositif de service du dispositif terminal ; et
le procédé comprenant en outre :
l'envoi (S920, S1020), par le deuxième dispositif de réseau, d'un message d'acquittement au dispositif terminal, le message d'acquittement indiquant que le dispositif terminal est autorisé à accéder au premier dispositif de réseau.

8. Procédé selon la revendication 7, dans lequel les deuxièmes informations sont associées à un premier signal de référence, et la réception (S420, S520, S820), par un deuxième dispositif de réseau, de deuxièmes informations envoyées par un dispositif terminal comprend :
la réception (S521), par le deuxième dispositif de réseau, du premier signal de référence envoyé par le dispositif terminal ; et
la détermination, par le deuxième dispositif de réseau, des deuxièmes informations en fonction du premier signal de référence.

9. Procédé selon la revendication 8, lequel procédé comprend en outre :
l'envoi (S522), par le deuxième dispositif de réseau, d'un deuxième signal de référence au dispositif terminal, une première relation spatiale existant entre le deuxième signal de référence et le premier signal de référence, et la première relation spatiale indiquant une manière d'envoyer le premier signal de référence.

10. Procédé selon l'une quelconque des revendications 7 à 9, dans lequel les deuxièmes informations comprennent au moins l'une des informations suivantes :
une ressource temps-fréquence, un schéma de modulation et codage, MCS, une puissance d'indicateur de matrice de précodage, PMI, une quantité de flux, une direction de faisceau, et un identifiant d'un dispositif terminal de desserte du premier dispositif de réseau.

11. Appareil de communication configuré pour mettre en œuvre le procédé selon l'une quelconque des revendications 1 à 6 ou 7 à 10.

12. Produit de programme informatique, lequel produit de programme informatique comprend un programme informatique ; et, lorsque le programme informatique est exécuté, le procédé selon l'une quelconque de revendications 1 à 6 ou 7 à 10 est mis en œuvre.

13. Support de stockage lisible par ordinateur, lequel support de stockage lisible par ordinateur stocke des instructions qui, lorsqu'elles sont exécutées par un processeur d'un appareil de communication, amènent l'appareil de communication à mettre en œuvre le procédé selon l'une quelconque des revendications 1 à 6 ou 7 à 10.
